# EUROPEAN PATENT SPECIFICATION

(11) **EP 3 771 151 B1**
(45) Date of publication and mention of the grant of the patent: **24.05.2023**
(21) Application number: 19787965.3
(22) Date of filing: 08.04.2019
(51) Int. Cl.: H04L 12/18, H04W 40/08

(54) **MULTICAST MESSAGE PROCESSING METHOD AND NETWORK DEVICE**
MULTICAST-NACHRICHTENVERARBEITUNGSVERFAHREN UND NETZWERKVORRICHTUNG
PROCÉDÉ DE TRAITEMENT DE MESSAGE DE MULTIDIFFUSION ET DISPOSITIF DE RÉSEAU

(30) Priority: 18.04.2018 CN 201810349912
(43) Date of publication of application: 27.01.2021
(73) Proprietor: HUAWEI TECHNOLOGIES CO., LTD., Shenzhen, Guangdong 518129 (CN)
(72) Inventor: YUAN, Feng, Shenzhen, Guangdong 518129 (CN); XU, Yueqiao, Shenzhen, Guangdong 518129 (CN); CHEN, Hao, Shenzhen, Guangdong 518129 (CN)
(74) Representative: Pfenning, Meinig & Partner mbB
(86) International application number: PCT/CN2019/081707
(87) International publication number: WO 2019/201106

(56) References cited:
- US-A1- 2015 373 735
- US-A1- 2016 212 740
- US-A1- 2017 264 532
- US-A1- 2017 272 144
- CLAUSEN THOMAS ET AL: "Performance analysis of Trickle as a flooding mechanism", 2013 15TH IEEE INTERNATIONAL CONFERENCE ON COMMUNICATION TECHNOLOGY, IEEE, 17 November 2013 (2013-11-17), pages 565-572, XP032597535, DOI: 10.1109/ICCT.2013.6820439 [retrieved on 2014-05-22]
- LEVIS, P. et al.: "RFC6206 The Trickle Algorithm", Internet Engineering Task Force (IETF), 31 March 2011 (2011-03-31), pages 5-7, XP015075938,
- HUI CISCO R KELSEY SILICON LABS J: "Multicast Protocol for Low power and Lossy Networks (MPL); draft-ietf-roll-trickle-mcast-02.txt", MULTICAST PROTOCOL FOR LOW POWER AND LOSSY NETWORKS (MPL); DRAFT-IETF-ROLL-TRICKLE-MCAST-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 19 October 2012 (2012-10-19), pages 1-24, XP015088121, [retrieved on 2012-10-19]
- LEVIS STANFORD UNIVERSITY T CLAUSEN LIX P ET AL: "The Trickle Algorithm; rfc6206.txt", THE TRICKLE ALGORITHM; RFC6206.TXT, INTERNET ENGINEERING TASK FORCE, IETF; STANDARD, INTERNET SOCIETY (ISOC) 4, RUE DES FALAISES CH- 1205 GENEVA, SWITZERLAND, 29 March 2011 (2011-03-29), pages 1-13, XP015075938, [retrieved on 2011-03-29]

## Description

### TECHNICAL FIELD

This application relates to the field of communications technologies, and in particular, to a multicast packet processing method and a network device.

### BACKGROUND

A low-power and lossy network (low-power and lossy network, LLN) is one type of internet of things (internet of things, IoT). Because of a characteristic that all things are connected in the internet of things, there are a large quantity of network nodes in the LLN.

In a current multicast protocol for LLNs (multicast protocol for LLNs, MPL), a multicast packet is processed based on controlled flooding (Flood). The processing process may be as follows: After receiving a multicast packet, a network node in an LLN establishes an independent trickle timer for the multicast packet, and starts the trickle timer. A plurality of trickle periods may be set in the trickle timer. For example, e trickle periods are set. A moment is selected from each trickle period as a sending moment T of the multicast packet. Before the sending moment T in each trickle period, the network node collects statistics about a total count c that neighboring network nodes send multicast packets. When the sending moment T is reached, the network node compares the total count c with a redundancy constant K, to deduce whether all the neighboring network nodes have received the multicast packet. If c ≥ k, the network node deduces that all the neighboring network nodes have received the multicast packet, and the network node does not need to send the multicast packet any more, to complete sending suppression. If c < k, the network node deduces that there is a neighboring network node that has not received the multicast packet, and the network node broadcasts the multicast packet.

A case of inaccurate determining usually occurs because a same redundancy constant is used in the LLN for determining whether to stop broadcast of the multicast packet or whether to continue to broadcast the multicast packet. Consequently, the following cases usually occur: Broadcast of the multicast packet is stopped when the multicast packet needs to be broadcast, and the multicast packet is still being broadcast when broadcast of the multicast packet needs to be stopped. As a result, the multicast packet cannot be accurately broadcast, thereby wasting network resources.

US 2016/212740 A1 discloses determining a plurality of channels in a channel-hopping network, on which a plurality of nodes communicate, and identifying an asynchronous broadcast message to transmit from a particular node. A plurality of time-based events is determined, and in response to each time-based event, the asynchronous broadcast message is transmitted on a single selected channel of the plurality of channels per time-based event.

LEVIS, P. ET AL.: "RFC6206 The Trickle Algorithm", Internet Engineering Task Force, IETF, 2011-03-31, pages 5-7, XP015075938, discloses six rules for Trickle algorithm.

### SUMMARY

The present invention is as defined in the appended set of claims. Embodiments of this application provide a multicast packet processing method and a network device, to set a redundancy constant based on a quantity of neighboring network nodes of a first network node and optimize a trickle period of a trickle timer corresponding to a first multicast packet, thereby saving network resources.

A first aspect of the embodiments of this application provides a multicast packet processing method, including:
in an LLN, when a second network node sends a first multicast packet to a first network node, receiving, by the first network node, the first multicast packet sent by the second network node, where the second network node is any neighboring network node of the first network node, and the neighboring network node is a network node connected to the first network node; after receiving the first multicast packet, establishing, by the first network node, a trickle timer corresponding to the first multicast packet, starting the trickle timer, and executing a first trickle period in e trickle periods of the trickle timer, where e is an integer greater than or equal to 2; in a process of executing the first trickle period, determining, by the first network node, whether a quantity Z1 of first multicast packets that are received in the first trickle period before a sending moment T1 is less than or equal to a first redundancy constant K1, where K1 is an integer greater than a quantity of neighboring network nodes, and T1 is a preset moment in the first trickle period; if Z1 is less than or equal to K1, broadcasting, by the first network node, the first multicast packet; after the first trickle period ends, continuing, by the first network node, to execute a second trickle period, and then determining whether a quantity Z2 of first multicast packets that are received in a second trickle period before a sending moment T2 is greater than or equal to a second redundancy constant K2, where K2 is an integer equal to the quantity of neighboring network nodes, and T2 is a preset moment in the second trickle period; and if Z2 is greater than or equal to K2, stopping, by the first network node, broadcast of the first multicast packet in the second trickle period, and executing a next trickle period; or if Z2 is less than K2, broadcasting, by the first network node, the first multicast packet. It can be learned from the first aspect that, the first network node can flexibly set the redundancy constant based on the quantity of neighboring network nodes, to improve accuracy of broadcasting the first multicast packet by the first network node, thereby saving network resources.

Based on the first aspect of the embodiments of this application, in a first implementation of the first aspect of the embodiments of this application, the multicast packet processing method further includes: when e is greater than or equal to 3, executing, by the first network node, a trickle algorithm corresponding to a third trickle period to an e^{th} trickle period, where a redundancy constant corresponding to each of the third trickle period to the e^{th} trickle period is an integer equal to the quantity of neighboring network nodes. It can be learned from the first implementation of the first aspect that, the first network node sets the redundancy constant corresponding to each of the third trickle period to the e^{th} trickle period to the integer qual to the quantity of neighboring network nodes, so that in a process of executing the third trickle period to the e^{th} trickle period, the first network node can accurately determine, based on the redundancy constant, whether each neighboring network node has received the first multicast packet, thereby improving accuracy of broadcasting the first multicast packet by the first network node.

Based on the first aspect of the embodiments of this application and the first implementation of the first aspect, in a second implementation of the first aspect of the embodiments of this application, the first network node receives the first multicast packet sent by the second network node, and the first multicast packet includes count information used to indicate that the second network node sends the first multicast packet an i^{th} time, where i is an integer greater than 0; and the determining, by the first network node, whether a quantity Z1 of first multicast packets that are received before a sending moment T1 is less than or equal to a first redundancy constant K1 includes: determining, by the first network node based on count information included in the first multicast packet that is received before T1, a quantity of first multicast packets that are sent the i^{th} time; and if the quantity of first multicast packets that are sent the i^{th} time is less than or equal to K1, determining, by the first network node, that Z1 is less than or equal to K1. It can be learned from the second implementation of the first aspect that, when T1 is reached, the first network node compares K1 with a quantity of first multicast packets that are sent for a same quantity of times. In actual application, the first network node can accurately determine, based on a comparison result, whether all the neighboring network nodes have received the first multicast packet.

Based on any one of the first aspect of the embodiments of this application, the first implementation of the first aspect, and the second implementation of the first aspect, in a third implementation of the first aspect of the embodiments of this application, the determining, by the first network node, whether a quantity Z2 of first multicast packets that are received in a second trickle period before a sending moment T2 is equal to a second redundancy constant K2 includes: determining, by the first network node based on count information included in the first multicast packet that is received before T2, the quantity of first multicast packets that are sent the i^{th} time; and if the quantity of first multicast packets that are sent the i^{th} time is equal to K2, determining, by the first network node, that the quantity Z2 of first multicast packets is equal to K2; and correspondingly, when Z2 is equal to K2, after the first network node stops broadcast of the first multicast packet, stopping, by the first network node, the trickle timer corresponding to the first multicast packet, and stopping execution of the trickle algorithm; or if the quantity of first multicast packets that are sent the i^{th} time is less than K2, determining, by the first network node, that the quantity Z2 of first multicast packets is less than K2. It can be learned from the third implementation of the first aspect that, the first network node compares K2 with a quantity of first multicast packets that are sent for a same quantity of times in the second trickle period. In actual application, the first network node can accurately determine, based on a comparison result, whether all the neighboring network nodes have received the first multicast packet; and after determining that all the neighboring network nodes have received the first multicast packet, stop the trickle timer corresponding to the first multicast packet, thereby saving network resources.

Based on any one of the first aspect of the embodiments of this application and the first implementation of the first aspect to the second implementation of the first aspect, in a fourth implementation of the first aspect of the embodiments of this application, the broadcasting, by the first network node, the first multicast packet includes: broadcasting, by the first network node, the first multicast packet to the neighboring network node, where the first multicast packet includes count information used to indicate that the first network node sends the first multicast packet a j^{th} time, and j is an integer greater than 0. It can be learned from the fourth implementation of the first aspect that, the first network node adds the count information to the broadcast first multicast packet, so that the neighboring network node that has received the first multicast packet including the count information can count the quantity of first multicast packets based on the count information.

Based on any one of the first aspect of the embodiments of this application and the first implementation of the first aspect to the second implementation of the first aspect, in a fifth implementation of the first aspect of the embodiments of this application, the determining, by the first network node based on count information included in the first multicast packet that is received before T1, a quantity of first multicast packets that are sent the i^{th} time includes: determining, by the first network node based on the count information, whether the first multicast packet that is received before T1 is sent the i^{th} time, and adding, to a trickle counter (i) corresponding to the i^{th} time, the quantity of first multicast packets that are sent the i^{th} time; and determining, by the first network node, that a value of the counter (i) is the quantity of first multicast packets that are sent the i^{th} time. It can be learned from the fifth implementation of the first aspect that, the count information is added to the first multicast packet, so that the first network node can count, based on the count information, the quantity of first multicast packets that are sent for a same quantity of times in the, trickle counter (i), to be specific, quantities that are of times of sending first multicast packets and that are counted in the trickle counters are the same.

Based on any one of the first aspect of the embodiments of this application and the first implementation of the first aspect to the third implementation of the first aspect, in a sixth implementation of the first aspect of the embodiments of this application, the determining, by the first network node based on count information included in the first multicast packet that is received before T2, the quantity of first multicast packets that are sent the i^{th} time includes: determining, by the first network node based on the count information, whether the first multicast packet that is received before T2 is sent the i^{th} time, and adding, to a trickle counter (i) corresponding to the i^{th} time, the quantity of first multicast packets that are sent the i^{th} time; and determining, by the first network node, that a value of the counter (i) is the quantity of first multicast packets that are sent the i^{th} time. It can be learned from the sixth implementation of the first aspect that, the count information is added to the first multicast packet, so that the first network node can count, based on the count information, the quantity of first multicast packets that are sent for the same quantity of times in the trickle counter (i), in other words, quantities that are of times of sending first multicast packets and that are counted in the trickle counters are the same.

Based on the first aspect of the embodiments of this application, in a seventh implementation of the first aspect of the embodiments of this application, before the determining, by the first network node, whether a quantity Z1 of first multicast packets that are received in the first trickle period before a sending moment T1 is less than or equal to a first redundancy constant K1, the method further includes: obtaining, by the first network node, the quantity of neighboring network nodes, and setting K1 or K2 based on the quantity of neighboring network nodes. It can be learned from the seventh implementation of the first aspect that, the first network node sets K1 or K2 based on the quantity of neighboring network nodes, so that K1 or K2 is more accurate.

Based on the seventh implementation of the first aspect, in an eighth implementation of the first aspect of the embodiments of this application, the obtaining, by the first network node, the quantity of neighboring network nodes includes: broadcasting, by the first network node, N second multicast packets to the neighboring network nodes, where the N second multicast packets are different from each other, the second multicast packet includes indication information, the indication information is used to instruct the second network node that has received the second multicast packet to broadcast the second multicast packet once, and N is an integer greater than or equal to 1; after each neighboring network node that has received the second multicast packet broadcasts the first multicast packet once, receiving, by the first network node, each of the N second multicast packets sent by the neighboring network nodes; counting same second multicast packets in the N second multicast packets, to determine a quantity of each of the N second multicast packets; and using a maximum quantity of second multicast packets in the second multicast packets as the quantity of neighboring network nodes. It can be learned from the eighth implementation of the first aspect that, the first network node sends the second multicast packet to obtain the quantity of neighboring network nodes. When the first network node is a dynamic network node, the quantity of neighboring network nodes that is obtained in this solution is more accurate.

Based on any one of the first aspect of the embodiments of this application and the first implementation of the first aspect to the eighth implementation of the first aspect, in a ninth implementation of the first aspect of the embodiments of this application, after the first network node stops sending of the multicast packet, the method further includes: receiving, by the first network node, a control packet sent by a server or an internet of things gateway, where the control packet includes a control instruction, and the control instruction is used to instruct the first network node to restart the trickle timer; restarting, by the first network node, the trickle timer according to the control instruction, and re-executing the trickle period corresponding to the trickle counter; and after stopping the trickle timer for the first multicast packet, receiving, by the first network node, the control packet to restart the trickle timer, so that a neighboring network node that has not received the first multicast packet can receive the first multicast packet.

A second aspect of the embodiments of this application provides a network device. The network device may be a first network node, and the network device includes a receiving unit, a processing unit, and a broadcast unit. The receiving unit is configured to perform a step related to a receiving operation according to any one of the first aspect and the possible implementations. The processing unit is configured to perform a step related to a processing operation according to any one of the first aspect and the possible implementations. The broadcast unit is configured to perform a step related to a broadcast operation according to any one of the first aspect and the possible implementations.

A third aspect of the embodiments of this application provides a network device. The network device may be a first network node, and the network device includes a memory, a transceiver, and at least one processor. The memory stores an instruction. The memory, the transceiver, and the at least one processor are connected by using a line.

A fourth aspect of this application provides a computer program product including an instruction. When the instruction is run on a computer, the method according to any one of the first aspect or the possible implementations of the first aspect is performed.

A fifth aspect of the embodiments of this application provides a computer storage medium. The computer storage medium stores an instruction. When the instruction is run on a computer, the computer is enabled to perform the method according to any one of the first aspect or the possible implementations of the first aspect.

A sixth aspect of this application provides a chip system. The chip system includes at least one processor and a communications interface. The chip system may further include a memory. The memory, the communications interface, and the at least one processor are connected by using a line. The at least one memory stores an instruction. The instruction is executed by the processor, to perform the method according to any one of the first aspect or the possible implementations of the first aspect.

It can be learned from the foregoing technical solutions that, the embodiments of this application have the following advantages:
In the embodiments, the first network node sets the redundancy constant in the trickle algorithm to a value greater than the quantity of neighboring network nodes in the first trickle period, to ensure that after receiving the first multicast packet a first time, the first network node broadcasts the first multicast packet to all the neighboring network nodes, so that the neighboring network nodes can receive the first multicast packet, and a delay of receiving the first multicast packet by the neighboring network nodes can be reduced. The first network node sets the redundancy constant in the trickle algorithm to a value equal to the quantity of neighboring network nodes in the second trickle period to the e^{th} trickle period, and determines, in each of the second trickle period to the e^{th} trickle period based on the comparison result of comparing the quantity of received first multicast packets with the redundancy constant, whether to broadcast the first multicast packet. Because the redundancy constant is flexibly set based on the quantity of neighboring network nodes of the first network node, accuracy of broadcasting the first multicast packet by the first network node can be improved, thereby saving network resources.

### BRIEF DESCRIPTION OF DRAWINGS

FIG. 1 is a schematic diagram of an application scenario according to an embodiment of this application;
FIG. 2 is a schematic flowchart of a multicast packet processing method according to an embodiment of this application;
FIG. 3 is a schematic diagram of another application scenario according to an embodiment of this application;
FIG. 4 is a schematic diagram of another application scenario according to an embodiment of this application;
FIG. 5 is a schematic diagram of another application scenario according to an embodiment of this application;
FIG. 6 is a schematic diagram of another application scenario according to an embodiment of this application;
FIG. 7 is a schematic flowchart of another multicast packet processing method according to an embodiment of this application;
FIG. 8 is a schematic diagram of a frame format of a multicast packet according to an embodiment of this application;
FIG. 9 is a schematic diagram of another application scenario according to an embodiment of this application;
FIG. 10 is a schematic diagram of another application scenario according to an embodiment of this application;
FIG. 11 is a schematic flowchart of another multicast packet processing method according to an embodiment of this application;
FIG. 12 is a schematic diagram of another application scenario according to an embodiment of this application;
FIG. 13 is a schematic diagram of another application scenario according to an embodiment of this application;
FIG. 14 is a schematic block diagram of a network device according to an embodiment of this application;
FIG. 15 is a schematic diagram of a hardware structure of a network device according to an embodiment of this application; and
FIG. 16 is a schematic diagram of a hardware structure of a chip system according to an embodiment of this application.

### DESCRIPTION OF EMBODIMENTS

The following describes technical solutions of this application with reference to the accompanying drawings.

The embodiments of this application provide a multicast packet processing method and a network device, to set a redundancy constant based on a quantity of neighboring network nodes of a first network node and optimize a trickle period of a trickle timer corresponding to a first multicast packet, thereby saving network resources.

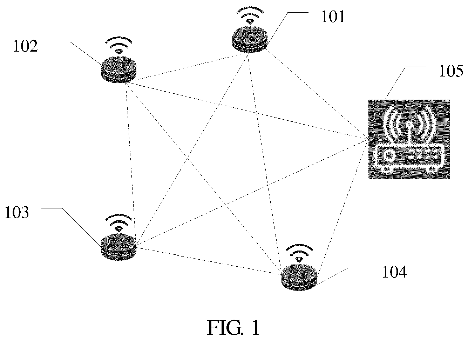

FIG. 1 is a schematic diagram of an application scenario of an LLN in the internet of things field according to an embodiment of this application. The schematic diagram of the application scenario includes network nodes 101 to 104 and an internet of things gateway 105. The internet of things gateway 105 establishes a connection to each network node. The connection may be a wireless connection or a wired connection. A wireless or wired connection is also established between the network nodes.

In this embodiment of this application, the network nodes 101 to 104 may be root nodes for generating multicast packets, or may be forwarding nodes responsible for forwarding multicast packets. In a multicast protocol for LLNs (Multicast Protocol for LLNs, MPL), a root node for generating a multicast packet is referred to as a seed node, and a forwarding node responsible for forwarding a multicast packet is referred to as a forwarder node. In actual application, the network nodes 101 to 104 may be nodes having a routing function, for example, may be routers or switches. This is not specifically limited herein.

The internet of things gateway 105 in this embodiment of this application can implement protocol interchange between a sensing network and a communications network and protocol conversion between different types of sensing networks, and can implement both wide area interconnection and local area interconnection. In addition, the internet of things gateway 105 further has a device management function. An operator can manage the network nodes 101 to 104 by using the internet of things gateway 105, learn of related information of the network nodes 101 to 104, and implement remote control.

It should be noted that, this embodiment of this application may be applied to an intelligent streetlight, and may also be applied to various internet of things fields such as a smart grid, a smart city, or a smart building.

In the MPL protocol, the network node calculates, by using a trickle algorithm, a quantity of multicast packets sent by a neighboring network node of the network node. A main working principle of the trickle algorithm (RFC 6206) is as follows: A network node in a network is enabled to collect statistics about a total count of receiving a specific multicast packet in a period of time, where the period of the time may be referred to as a trickle period; and then determines a total count at a preset moment T in the trickle period, where any moment in the trickle period may be selected when the preset moment T is set. If the total count exceeds a specific threshold, the network node determines that the network node and the neighboring network node have a consistent status of receiving a multicast packet. In other words, both the network node and the neighboring network node have received the multicast packet. Otherwise, the network node determines that the network node and the neighboring network node in the network do not have the consistent status of receiving a multicast packet. In other words, there is a neighboring network node that has not received the multicast packet. When the network node determines that the network node and the neighboring network node have the consistent status of receiving a multicast packet, the network node does not need to broadcast the multicast packet to the outside. However, if the network node and the neighboring network node do not have the consistent status of receiving a multicast packet, the network node needs to perform a data update operation with the neighboring network node, so that the network node and the neighboring network node have the consistent status of receiving a multicast packet.

Parameters of the trickle algorithm in MPL are shown in Table 1-1:

**Table 1-1. Parameters of the trickle algorithm**

| | |
|---|---|
| e | Total period quantity of trickle periods |
| k | Redundancy constant |
| c | Quantity of same event in each trickle period (namely, receiving of a same multicast packet for the MPL) |
| T | Sending moment in the trickle period |

The network node, the internet of things gateway, and the trickle algorithm executed by the network node in the MPL protocol are described above. A multicast packet processing method in an embodiment of this application is described below with reference to the accompanying drawings.

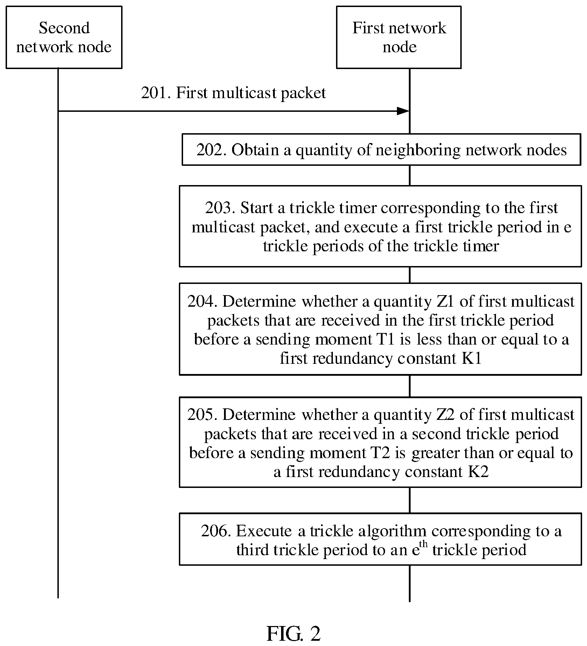

FIG. 2 is a schematic flowchart of a multicast packet processing method according to an embodiment of this application. As shown in FIG. 2, the multicast packet processing method includes the following steps.

201. A first network node receives a first multicast packet sent by a second network node.

In an LLN, after the second network node obtains the first multicast packet, the second network node sends the first multicast packet to the first network node. In this case, the first network node receives, by using a receiving device, the first multicast packet sent by the second network node. The second network node is a neighboring network node of the first network node, and the neighboring network node of the first network node is a network node connected to the first network node. It should be noted that, the neighboring network node of the first network node may be a network node that is connected to the first network node in a wired manner, or may be a network node that is connected to the first network node in a wireless manner. The neighboring network node that is connected in the wireless manner may be a network node within coverage of a radio signal of the first network node. This is not specifically limited herein.

202. The first network node obtains a quantity of neighboring network nodes.

Before establishing a trickle timer corresponding to the first multicast packet, the first network node obtains the quantity of neighboring network nodes. Specifically, the first network node broadcasts N second multicast packets to all neighboring network nodes within the coverage of the radio signal, where the N second multicast packets are different from each other, the second multicast packet includes indication information, the indication information is used to instruct all neighboring network nodes that have received the second multicast packet to broadcast the second multicast packet once, and N is an integer greater than or equal to 1.

After the neighboring network nodes receive the N second multicast packets, the neighboring network nodes broadcast each of the N second multicast packets once according to the indication information.

The first network node receives each of the N second multicast packets broadcast by the neighboring network nodes, and determines a maximum quantity of second multicast packets in the N second multicast packets as the quantity of neighboring network nodes.

An example in which the first network node broadcasts five second multicast packets to all the neighboring network nodes of the first network node is used below for description.

Specifically, the first network node respectively marks the five second multicast packets, for example, marks the first second multicast packet as 1, the second second multicast packet as 2, ..., and the fifth second multicast packet as 5. Then the first network node broadcasts the five marked second multicast packets to all the neighboring network nodes according to a preset rule. The preset rule may be that the five second multicast packets are broadcast at a particular time interval, for example, the first network node broadcasts one second multicast packet at an interval of 2 ms. It should be noted that, in this embodiment, the five second multicast packets carrying marks may be separately broadcast according to another rule. The preset rule is not limited in this embodiment.

After the neighboring network node receives the second multicast packet, because each second multicast packet includes indication information, the neighboring network node broadcasts the second multicast packet once according to the indication information. In other words, as long as the neighboring network node has received any second multicast packet including the indication information, the neighboring network node broadcasts the second multicast packet and broadcasts the second multicast packet only once.

After the neighboring network node broadcasts the second multicast packet, the first network node receives the second multicast packet broadcast by the neighboring network node, and the first network node separately counts quantities of the five second multicast packets. For example, a quantity of second multicast packets marked as 1 is counted in a counter (1), a quantity of second multicast packets marked as 2 is counted in a counter (2), ..., and a quantity of second multicast packets marked as 5 is counted in a counter (5). Then a value of a counter with a maximum value in the counter (1), the counter (2), ..., and the counter (5) is used as the quantity of neighboring network nodes. For example, when the counter (1) = 3, the counter (2) = 1, the counter (3) = 4, the counter (4) = 2, and the counter (5) = 3, it can be learned that, the quantity of second multicast packets marked as 3 is the largest. In this case, the first network node determines that the quantity of neighboring network nodes of the first network node is 4.

It should be noted that, the example in which the quantity of second multicast packets is counted by using the counter (1) to the counter (5) is used above. In actual application, the quantity of neighboring network nodes is determined by using a specific value of a counter.

It should be noted that, in actual application, the first network node obtains the quantity of neighboring network nodes in the foregoing manner of sending the second multicast packets, and the first network node may further preset the quantity of neighboring network nodes of the first network node in the first network node. This is not limited herein.

203. The first network node starts a trickle timer corresponding to the first multicast packet, and executes a first trickle period in e trickle periods of the trickle timer.

After the first network node receives the first multicast packet sent by the second network node, the first network node establishes an independent trickle timer for the first multicast packet, starts the trickle timer, executes the trickle algorithm of the trickle timer, and executes the first trickle period in the e trickle periods of the trickle algorithm, where e is an integer greater than or equal to 2.

It should be noted that, in a process in which the first network node establishes the trickle timer, the first network node sets, to K1, a first redundancy constant in the first trickle period executed in the trickle timer, where K1 is an integer greater than the quantity of neighboring network nodes of the first network node; and sets a second redundancy constant in a second trickle period to K2, where K2 is an integer equal to the quantity of neighboring network nodes of the first network node.

It should be noted that, in actual application, the first network node may alternatively set a redundancy constant in any one of the e trickle periods of the trickle timer to K1, and set a redundancy constant in a remaining trickle period to K2. To be specific, in actual application, the first network node may alternatively set a redundancy constant in any one of the first trickle period to an e^{th} trickle period to K1, and set, to K2, a redundancy constant in a trickle period other than the trickle period for which K1 is set.

In this embodiment, only an example in which the first network node sets, to K1, the first redundancy constant in the first trickle period executed in the trickle timer, and sets the second redundancy constant in the second trickle period to K2 is used for description.

204. The first network node determines whether a quantity Z1 of first multicast packets that are received in the first trickle period before a sending moment T1 is less than or equal to the first redundancy constant K1, and if the quantity Z1 of first multicast packets that are received in the first trickle period before the sending moment T1 is less than or equal to the first redundancy constant K1, the first network node broadcasts the first multicast packet.

After the first network node starts the trickle timer, in a process of executing the first trickle period, the first network node may further receive a first multicast packet sent by another neighboring network node. When the sending moment T1 in the first trickle period is reached, the first network node counts the quantity Z1 of first multicast packets that are received in the first trickle period before T1, and then compares Z1 with the first redundancy constant K1. If Z1 less than or equal to K1, the first network node broadcasts the first multicast packet to all the neighboring network nodes, and continues to execute the second trickle period after the first trickle period ends, where T1 is a preset moment in the first trickle period, and the preset moment may be any moment in the first trickle period.

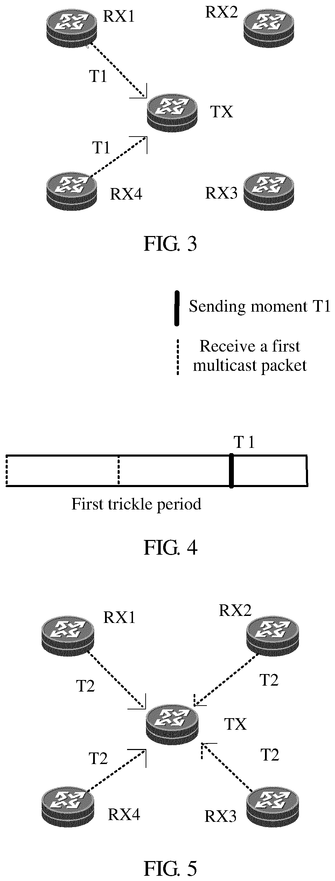

Specifically, refer to FIG. 3 and FIG. 4. In FIG. 3, a network node TX is the first network node, and RX1, RX2, RX3, and RX4 are neighboring network nodes of the first network node. In other words, K1 is greater than 4. Herein, before T1, TX receives first multicast packets that are respectively sent by RX1 and RX4. FIG. 4 shows a first trickle period corresponding to a trickle timer established by TX, where T1 is a sending moment in the first trickle period. When T1 is reached, TX counts a quantity Z1 of first multicast packets that are received by TX. It can be learned according to FIG. 4 that, before T1, TX receives the first multicast packets that are respectively sent by RX1 and RX4. In other words, Z1 = 2. The first network node compares Z1 with K1. It can be learned that, Z1 is less than K1. Therefore, TX determines that there is at least one neighboring network node that has not received the first multicast packet. In this case, TX broadcasts the first multicast packet to all the neighboring network nodes at the moment T1.

It should be noted that, in this embodiment and subsequent embodiments, a quantity of multicast packets that is counted by the first network node in each trickle period is the quantity of first multicast packets.

205. The first network node determines whether a quantity Z2 of first multicast packets that are received in a second trickle period before a sending moment T2 is greater than or equal to the second redundancy constant K2, and if yes, performs step 206.

In a process in which the first network node executes the second trickle period, the first network node receives the first multicast packet sent by the neighboring network node. When the sending moment T2 in the second trickle period is reached, the first network node counts the quantity Z2 of first multicast packets that are received in the second trickle period, and then compares Z2 with the second redundancy constant K2. If Z2 is greater than or equal to K2, the first network node determines that all the neighboring network nodes have received the first multicast packet, and the first network node stops broadcast of the first multicast packet in the second trickle period. If Z2 is less than K2, the first network node broadcasts the first multicast packet to all the neighboring network nodes, and continues to execute a third trickle period after the second trickle period ends.

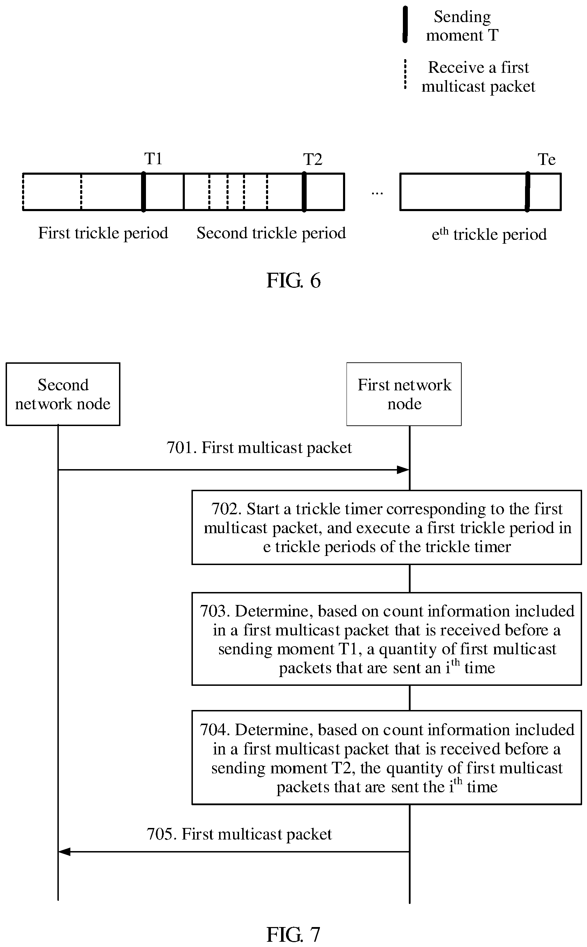

Specifically, refer to FIG. 5 and FIG. 6. In FIG. 5, a network node TX is the first network node, and RX1, RX2, RX3, and RX4 are neighboring network nodes of the first network node. In other words, K2 = 4. Herein, before the sending moment T2 in the second trickle period, TX receives first multicast packets that are respectively sent by RX1, RX2, RX3, and RX4. FIG. 6 shows e trickle periods of a trickle timer established by TX. Before T1, TX receives the first multicast packets that are respectively sent by RX1 and RX4, and before T2, TX receives the first multicast packets that are respectively sent by RX1, RX2, RX3, and RX4, where T2 is the sending moment in the second trickle period, T2 is a preset moment in the second trickle period, Te is a sending moment in the e^{th} trickle period, and Te is a preset moment in the e^{th} trickle period.

When T2 is reached, TX counts the quantity Z2 of first multicast packets that are received in the second trickle period. It can be learned from FIG. 6 that, before T2 in the second trickle period, TX receives the first multicast packets that are respectively sent by RX1, RX2, RX3, and RX4. In other words, Z2 = 4. The first network node compares Z2 with K2. It can be learned that, Z2 is equal to K2. Therefore, the first network node determines that all the neighboring network nodes have received the first multicast packet. In this case, the first network node stops broadcast of the first multicast packet at the moment T2. In addition, if e in the trickle algorithm is greater than 2, the first network node continues to execute a next period after the second trickle period ends.

It should be noted that, content described in FIG. 5 and FIG. 6 is an example. In actual application, specifically, whether to broadcast the first multicast packet or stop broadcast of the first multicast packet is determined based on a quantity of multicast packets that are received by TX.

206. The first network node executes a trickle algorithm corresponding to the third trickle period to the e^{th} trickle period.

When the first network node establishes the trickle timer corresponding to the first multicast packet, if e in the trickle algorithm of the trickle timer is greater than or equal to 3, the first network node continues to execute the third trickle period to the e^{th} trickle period after the second trickle period ends, and sets redundancy constants K respectively corresponding to the third trickle period to the e^{th} trickle period to the quantity of neighboring network nodes of the first network node. In a process of executing the third trickle period to the e^{th} trickle period, the first network node compares the redundancy constant K with a quantity of first multicast packets that are received in each of the third trickle period to the e^{th} trickle period; and if the quantity of received first multicast packets is greater than or equal to the redundancy constant K, stops broadcast of the first multicast packet in a corresponding trickle period; or if the quantity of received first multicast packets is less than the redundancy constant K, broadcasts the multicast packet to each neighboring network node at a sending moment T in a corresponding trickle period, until each trickle period in the trickle algorithm is executed and completed.

In this embodiment, the first network node sets the redundancy constant in the trickle algorithm to a value greater than the quantity of neighboring network nodes in the first trickle period, to ensure that after receiving the first multicast packet a first time, the first network node broadcasts the first multicast packet to all the neighboring network nodes, so that the neighboring network nodes can receive the first multicast packet, and a delay of receiving the first multicast packet by the neighboring network nodes can be reduced. The first network node sets the redundancy constant in the trickle algorithm to a value equal to the quantity of neighboring network nodes in the second trickle period to the e^{th} trickle period, and determines, in each of the second trickle period to the e^{th} trickle period based on the comparison result of comparing the quantity of received first multicast packets with the redundancy constant, whether to broadcast the first multicast packet. Because the redundancy constant is flexibly set based on the quantity of neighboring network nodes of the first network node, accuracy of broadcasting the first multicast packet by the first network node can be improved, thereby saving network resources.

FIG. 7 is a schematic flowchart of another multicast packet processing method according to an embodiment of this application. As shown in FIG. 7, the multicast packet processing method includes the following steps.

701. A first network node receives a first multicast packet sent by a second network node.

In an LLN, after the second network node obtains the first multicast packet, the second network node sends the first multicast packet to the first network node. In this case, the first network node receives, by using a receiving device, the first multicast packet sent by the second network node. The first multicast packet includes count information used to indicate that the second network node sends the first multicast packet an i^{th} time, where i is an integer greater than 0.

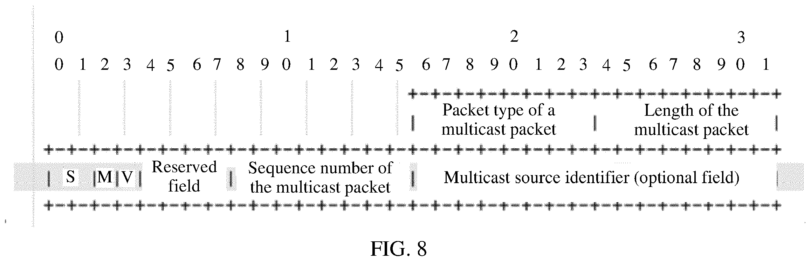

Specifically, for the count information included in the first multicast packet, refer to FIG. 8. FIG. 8 shows a frame format of a first multicast packet in the MPL, where S, M, and V are used to mark different feature fields. A reserved (reserved, rsv) field is a reserved field in the LLN, in other words, the rsv field is temporarily not used in a standardization organization. A sequence number (sequence) field of a multicast packet is used to represent an order of first multicast packets. A multicast source identifier (Seed-id) field is used to represent a multicast source device that sends the first multicast packet. The Seed-id field is an optional field and may exist or not exist in actual application. A packet type (Option Type) field of the multicast packet and a length (Opt Data len) field of the multicast packet are fields of an IPv6 multicast packet frame, and are used to indicate that the first multicast packet is an IPv6 Hop by Hop extension packet. The Option Type field is used to represent a packet type of the first multicast packet. The Opt Data len field is used to represent a length of the first multicast packet.

In this embodiment, the second network node uses the rsv field to identify the count information in the first multicast packet. In a specific implementation process, different values may be assigned to the rsv field, to represent a time for which the second network node sends the first multicast packet. For example, when 1 is assigned to the rsv field, it indicates that the second network node sends the first multicast packet a first time; or when 2 is assigned to the rsv field, it indicates that second network node sends the first multicast packet a second time; and so on.

It should be noted that, in this embodiment, a newly added field or another field may alternatively be used to identify the count information in the first multicast packet.

702. The first network node starts a trickle timer corresponding to the first multicast packet, and executes a first trickle period in e trickle periods of the trickle timer.

After the first network node receives the first multicast packet sent by the second network node, the first network node establishes an independent trickle timer for the first multicast packet, starts the trickle timer, executes a trickle algorithm of the trickle timer, and executes a first trickle period in e trickle periods in the trickle algorithm, where e is an integer greater than or equal to 2.

703. The first network node determines, based on count information included in the first multicast packet that is received before T1, a quantity of first multicast packets that are sent an i^{th} time.

In a process in which the first network node executes the first trickle period, after determining, based on the count information, that the first multicast packet is sent by the second network node to the first network node the i^{th} time, the first network node adds the quantity of first multicast packets to a trickle counter corresponding to the i^{th} time. Then the first network node determines, based on a value of the trickle counter, the quantity of first multicast packets that are sent the i^{th} time.

Specifically, the first network node extracts a value of the rsv field of the first multicast packet for counting. For example, if an rsv field of a first multicast packet received by the first network node is marked as 1, it indicates that the second network node sends the first multicast packet to the first network node the first time, and the first network node adds 1 to a counter (counter (1)), to record an adding result in a result (sum (1)). If an rsv field of a first multicast packet received by the first network node is marked as 2, it indicates that the second network node sends the first multicast packet to the first network node the second time, and 1 is added to a counter (2) of the first network node, to record an adding result in sum (2); and so on. If an rsv field of a first multicast packet received by the first network node is marked as i, it indicates that the second network node sends the first multicast packet to the first network node the i^{th} time, and the first network node adds 1 to a counter (i), to record an adding result in sum (i). In other words, a value of sum (i) is the quantity of first multicast packets that are sent the i^{th} time.

In the first trickle period, after the first network node counts the quantity of first multicast packets in the counter (i), the first network node compares a redundancy constant K with values respectively corresponding to count results sum (1), sum (2), ..., and sum (i). If at least one of the values respectively corresponding to sum (1), sum (2), ..., and sum (i) is greater than the redundancy constant K, it indicates that each neighboring network node has received the first multicast packet. At the moment T1, the first network node stops broadcast of the first multicast packet, stops execution of the trickle timer, and no longer executes a second trickle period to an e^{th} trickle period in the trickle algorithm. If none of the values respectively corresponding to sum (1), sum (2), ..., and sum (i) is greater than the redundancy constant K, it indicates that there is at least one neighboring network node that has not received the first multicast packet, and the first network node broadcasts the first multicast packet to all the neighboring network nodes at the moment T1, and executes the second trickle period in the trickle algorithm.

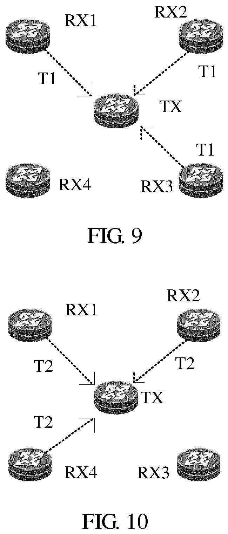

Specifically, FIG. 9 is a schematic diagram of a scenario corresponding to the first trickle period. In FIG. 9, TX separately receives first multicast packets that are sent by RX1, RX2, and RX3. The first network node extracts an rsv field of the first multicast packet sent by RX1, to identify the first multicast packet. If the first multicast packet is sent by RX1 to the TX node a first time, the first network node adds 1 to the counter (1), to record an adding result in sum (1). In this case, sum (1) = 1. The first network node extracts an rsv field of the first multicast packet sent by RX2, to identify the first multicast packet. If the first multicast packet is sent by RX2 to the TX node a first time, the first network node adds 1 to the counter (1), to record an adding result in sum (1). In this case, sum (1) = 2. The first network node extracts an rsv field of the first multicast packet sent by RX3, to identify the first multicast packet. If the first multicast packet is sent by RX3 to the TX node a first time, the first network node adds 1 to the counter (1), to record an adding result in sum (1). In this case, sum (1) = 3. The first network node compares a value of sum (1) at the moment T1 with the redundancy constant K. If sum (1) is less than the redundancy constant K, the first network node broadcasts the first multicast packet and continues to execute the second trickle period. If the value of sum (1) is equal to the redundancy constant K, the first network node stops broadcast of the first network node, stops the trickle timer, and no longer executes a subsequent trickle period.

It should be noted that, the redundancy constant K in this embodiment may be set based on a quantity of neighboring network nodes. For details, refer to the embodiment corresponding to FIG. 2. The redundancy constant K may alternatively be set based on a plurality of factors such as a network topology and a quantity of hops. A method for setting the redundancy constant K based on a plurality of factors such as a network topology and a quantity of hops is similar to that in a standard processing procedure. Details are not described herein.

704. The first network node determines, based on count information included in a first multicast packet that is received before T2, the quantity of first multicast packets that are sent the i^{th} time.

After the first network node determines that there is at least one neighboring network node that has not received the first multicast packet in the first trickle period, the first network node continues to execute the second trickle period, and receives the first multicast packet from the neighboring network node. When T2 is reached, the first network node counts a quantity of first multicast packets that are received before the sending moment T2. Specifically, if determining, based on the count information included in the first multicast packet, that the first multicast packet is sent by the second network node the i^{th} time, the first network node adds the quantity of first multicast packets to the trickle counter corresponding to the i^{th} time, and the first network node determines, based on a value of the trickle counter, the quantity of first multicast packets that are sent the i^{th} time.

Specifically, FIG. 10 is a schematic diagram of a scenario corresponding to the second trickle period. In FIG. 10, TX separately receives first multicast packets that are sent by RX1, RX2, and RX4. The first network node extracts an rsv field of the first multicast packet sent by RX1, to identify the first multicast packet. If the first multicast packet is sent by RX1 to the TX node a second time, the first network node adds 1 to the counter (2), to record an adding result in sum (2). In this case, sum (2) = 1. The first network node extracts an rsv field of the first multicast packet sent by RX2, to identify the first multicast packet. If the first multicast packet is sent by RX2 to the TX node a second time, the first network node adds 1 to the counter (2), to record an adding result in sum (2). In this case, sum (2) = 2. The first network node extracts an rsv field of the first multicast packet sent by RX4, to identify the first multicast packet. If the first multicast packet is sent by RX4 to the TX node a first time, the first network node adds 1 to the counter (1), to record an adding result in sum (1). In this case, sum (1) = 4 (sum (1) = 3 is already recorded in step 703). When the moment T2 is reached, TX compares the redundancy constant K with values respectively corresponding to sum (1) and sum (2). _{>}If the values respectively corresponding to sum (1) and sum (2) are both less than the redundancy constant K, the first network node broadcasts the first multicast packet at the moment T2, and executes the third trickle period after the second trickle period ends. _{>}If at least one of the values respectively corresponding to sum (1) and sum (2) is equal to the redundancy constant K, the first network node stops broadcast of the first multicast packet, stops the trickle timer, and no longer executes a subsequent trickle period in the trickle algorithm.

It should be noted that, in this embodiment, for the value of sum (i), based on the first trickle period, the quantity of first multicast packets that are sent the i^{th} time and that are included in the second trickle period is added to sum (i). In other words, the value of sum (i) includes the quantity of first multicast packets that is counted in the first trickle period.

705. The first network node broadcasts the first multicast packet.

When the first network node determines that there is at least one neighboring network node that has not received the first multicast packet, the first network node broadcasts the first multicast packet to all the neighboring network nodes, where the broadcast first multicast packet includes count information used to indicate that the first network node sends the first multicast packet a j^{th} time, and j is an integer greater than 0.

In this embodiment, the first multicast packet broadcast by the first network node to all the neighboring network nodes includes the count information. A specific implementation process thereof is already described in detail in step 701 above. Details are not described herein again.

In this embodiment, the first network node determines, based on the count information included in the first multicast packet, that the first multicast packet is sent by the second network node the i^{th} time, records the first multicast packets that are sent the i^{th} time in sum (i), then compares the value of sum (i) with the redundancy constant K, and determines, based on a comparison result, whether to broadcast the first multicast packet. Because the first multicast packet includes the count information, quantities that are of the first multicast packets and that are recorded in sum (i) correspond to different second network nodes. Therefore, the first network node can accurately determine, based on the value of sum (i), whether all the neighboring network nodes have received the first multicast packet, to improve accuracy of broadcasting the first multicast packet by the first network node, thereby saving network resources.

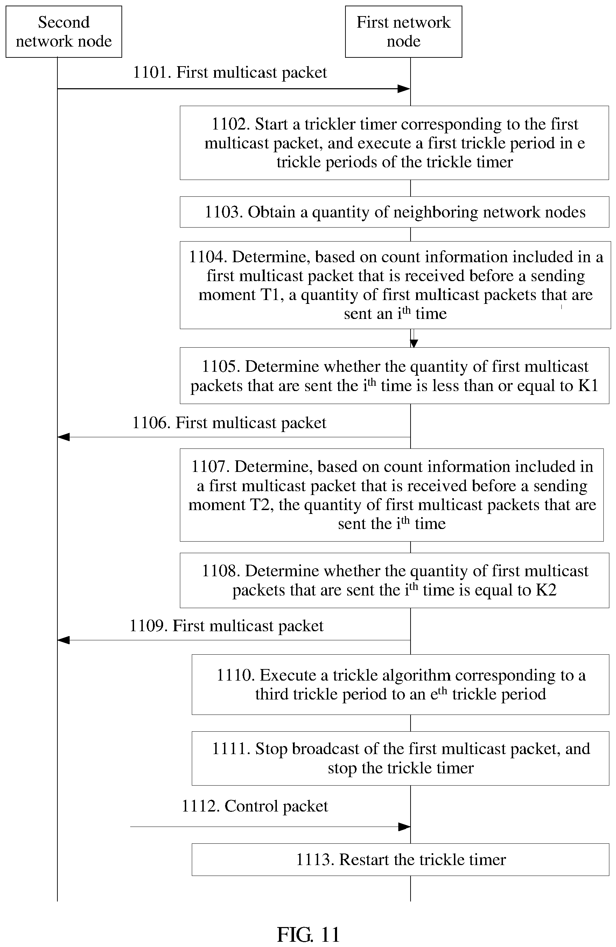

FIG. 11 is a schematic flowchart of another multicast packet processing method according to an embodiment of this application. As shown in FIG. 11, the multicast packet processing method includes the following steps.

1101. A first network node receives a first multicast packet sent by a second network node.

In this embodiment, step 1101 is similar to step 701 in FIG. 7. Details are not described herein again.

1102. The first network node starts a trickle timer corresponding to the first multicast packet, and executes a first trickle period in e trickle periods of the trickle timer.

1103. The first network node obtains a quantity of neighboring network nodes.

In this embodiment, step 1102 and step 1103 are similar to step 202 and step 203 in FIG. 2. Details are not described herein again.

1104. The first network node determines, based on count information included in the first multicast packet that is received before T1, a quantity of first multicast packets that are sent an i^{th} time.

The first network node determines, based on a determined value of the trickle counter, the quantity of first multicast packets that are sent the i^{th} time.

Specifically, the first network node extracts a value of an rsv field of the first multicast packet for counting. For example, if an rsv field of the first multicast packet received by the first network node is marked as 1, it indicates that the second network node sends the first multicast packet to the first network node a first time, and the first network node adds 1 to a counter (1), to record an adding result in sum (1). If an rsv field of a first multicast packet received by the first network node is marked as 2, it indicates that the second network node sends the first multicast packet to the first network node a second time, and 1 is added to a counter (2) of the first network node, to record an adding result in sum (2); and so on. If an rsv field of a first multicast packet received by the first network node is marked as i, it indicates that the second network node sends the first multicast packet to the first network node an i^{th} time, and the first network node adds 1 to a counter (i), to record an adding result in sum (i). In other words, a value of sum (i) is the quantity of first multicast packets that are sent the i^{th} time.

That the first network node determines, based on count information included in the first multicast packet that is received before T1, a quantity of first multicast packets that are sent an i^{th} time is described below with reference to the accompanying drawings:

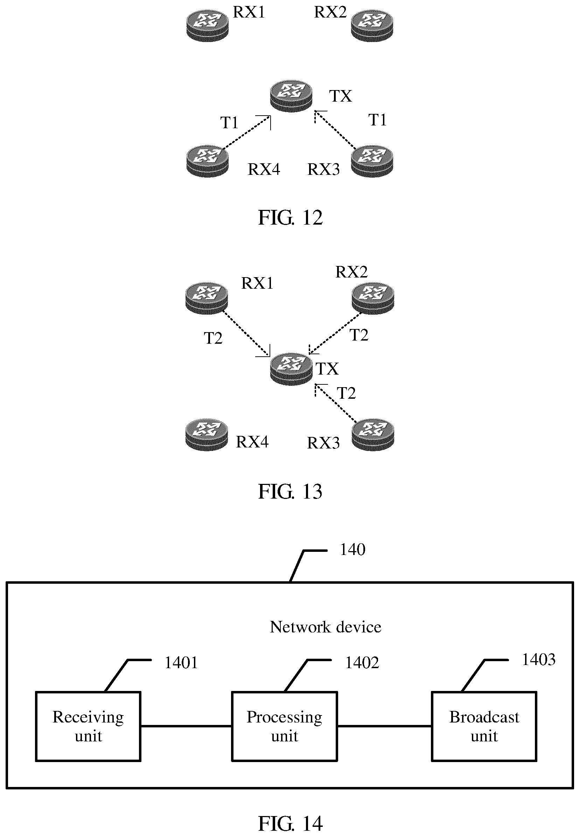

FIG. 12 is a schematic diagram of a scenario corresponding to the first trickle period. In FIG. 12, a network node TX is the first network node, and RX1, RX2, RX3, and RX4 are neighboring network nodes of the first network node. In other words, K1 is greater than 4. Before T1, TX receives first multicast packets that are respectively sent by RX3 and RX4. The first network node extracts an rsv field of the first multicast packet sent by RX3, to identify the first multicast packet. If the first multicast packet is sent by RX3 to the TX node the first time, the first network node adds 1 to the counter (1), to record an adding result in sum (1). In this case, sum (1) = 1. The first network node extracts an rsv field of the first multicast packet sent by RX4, to identify the first multicast packet. If the first multicast packet is sent by RX4 to the TX node the first time, the first network node adds 1 to the counter (1), to record an adding result in sum (1). In this case, sum (1) = 2.

1105. The first network node determines whether the quantity of first multicast packets that are sent the i^{th} time is less than or equal to K1, and if yes, performs step 1106, or if not, performs step 1111.

In the first trickle period, after the first network node counts the quantity of first multicast packets that are received before T1 in the counter (i), the first network node compares K1 with values respectively corresponding to count results sum (1), sum (2), ..., and sum (i). If at least one of the values respectively corresponding to sum (1), sum (2), ..., and sum (i) is greater than K1, it indicates that each neighboring network node has received the first multicast packet. At the moment T1, the first network node stops broadcast of the first multicast packet, stops execution of the trickle timer, and no longer executes a second trickle period to an e^{th} trickle period in the trickle algorithm. If all of the values respectively corresponding to sum (1), sum (2), ..., and sum (i) are less than or equal to K1, it indicates that there is at least one neighboring network node that has not received the first multicast packet, and the first network node broadcasts the first multicast packet to all the neighboring network nodes at the moment T1, and executes the second trickle period in the trickle algorithm.

Specifically, TX compares a value of sum (1) with K1. It can be learned from step 1104 that, sum (1) = 2. It can be learned that, the value of sum (1) is less than K1. In this case, when T1 is reached, TX broadcasts the first multicast packet to RX1, RX2, RX3, and RX4, and executes the second trickle period after the first trickle period ends.

1106. The first network node broadcasts the first multicast packet.

When the first network node determines that there is at least one neighboring network node that has not received the first multicast packet, the first network node broadcasts the first multicast packet to all the neighboring network nodes, where the broadcast first multicast packet includes count information, and the count information is used to indicate that the first network node sends the first multicast packet the first time.

In this embodiment, the first multicast packet broadcast by the first network node to all the neighboring network nodes includes the count information. A specific implementation process thereof is already described in detail in step 701 above. Details are not described herein again.

1107. The first network node determines, based on count information included in the first multicast packet that is received before T2, the quantity of first multicast packets that are sent the i^{th} time.

After the first network node determines that there is at least one neighboring network node that has not received the first multicast packet in the first trickle period, the first network node continues to execute the second trickle period, and receives the first multicast packet from the neighboring network node. When T2 is reached, the first network node counts a quantity of first multicast packets that are received before T2. Specifically, if determining, based on the count information included in the first multicast packet, that the first multicast packet is sent by the second network node the i^{th} time, the first network node adds the quantity of first multicast packets to the trickle counter corresponding to the i^{th} time, and the first network node determines, based on a value of the trickle counter, the quantity of first multicast packets that are sent the i^{th} time.

Specifically, FIG. 13 is a schematic diagram of a scenario corresponding to the second trickle period. In FIG. 13, a network node TX is the first network node, and RX1, RX2, RX3, and RX4 are neighboring network nodes of the first network node. In other words, K2 is equal to 4. Before T2, TX receives first multicast packets that are respectively sent by RX1, RX2, and RX3. The first network node extracts an rsv field of the first multicast packet sent by RX1, to identify the first multicast packet. If the first multicast packet is sent by RX1 to the TX node the first time, the first network node adds 1 to the counter (1), to record an adding result in sum (1). In this case, sum (1) = 3 (sum (1) = 2 is already recorded in step 1104). The first network node extracts an rsv field of the first multicast packet sent by RX2, to identify the first multicast packet. If the first multicast packet is sent by RX4 to the TX node the first time, the first network node adds 1 to the counter (1), to record an adding result in sum (1). In this case, sum (1) = 4. The first network node extracts an rsv field of the first multicast packet sent by RX3, to identify the first multicast packet. If the first multicast packet is sent by RX4 to the TX node the second time, the first network node adds 1 to the counter (2), to record an adding result in sum (2). In this case, sum (2) = 1.

It should be noted that, in this embodiment, for a value of sum (i), based on the first trickle period, the quantity of first multicast packets that are sent the i^{th} time and that are included in the second trickle period is added to sum (i). In other words, the value of sum (i) includes the quantity of first multicast packets that is counted in the first trickle period.

1108. The first network node determines whether the quantity of first multicast packets that are sent the i^{th} time is equal to K2, and if not, performs step 1109, or if yes, performs step 1111.

After the first network node counts the quantity of first multicast packets in the trickle counter, the first network node compares the value of sum (i) in the trickle counter with K2. Specifically, the first network node compares K2 with values respectively corresponding to sum (1), sum (2), ..., and sum (i). If at least one of the values respectively corresponding to sum (1), sum (2), ..., and sum (i) is equal to K2, it indicates that each neighboring network node has received the first multicast packet. At the moment T2, the first network node stops broadcast of the first multicast packet, stops execution of the trickle timer, and no longer executes a second trickle period to an e^{th} trickle period in the trickle algorithm. If all of the values respectively corresponding to sum (1), sum (2), ..., and sum (i) are less than K2, it indicates that there is at least one neighboring network node that has not received the first multicast packet, and the first network node broadcasts the first multicast packet to all the neighboring network nodes at the moment T2, and executes a next trickle period in the trickle algorithm.

Specifically, when the moment T2 is reached, TX compares K2 with the values respectively corresponding to sum (1) and sum (2). It can be learned that, sum (2) is less than K2, and sum (1) is equal to K2. Therefore, TX determines that RX1, RX2, RX3, and RX4 all have received the first multicast packet, and TX stops broadcast of the multicast packet, stops the trickle timer corresponding to the first multicast packet, and no longer executes a subsequent trickle period of the trickle timer.

1109. The first network node broadcasts the first multicast packet.

When the first network node determines that there is at least one neighboring network node that has not received the first multicast packet, the first network node broadcasts the first multicast packet to all the neighboring network nodes, where the broadcast first multicast packet includes count information, and the count information is used to indicate that the first network node sends the first multicast packet the second time.

In this embodiment, the first multicast packet broadcast by the first network node to all the neighboring network nodes includes the count information. A specific implementation process thereof is already described in detail in step 701 above. Details are not described herein again.

1110. The first network node executes a trickle algorithm corresponding to the third trickle period to the e^{th} trickle period.

When e is greater than or equal to 3, in the second trickle period, the first network node determines that all of the values respectively corresponding to sum (1), sum (2), ..., and sum (i) are less than K2, the first network node executes the third trickle period to the e^{th} trickle period, and sets, to the quantity of neighboring network nodes of the first network node, redundancy constants K respectively corresponding to the third trickle period to the e^{th} trickle period. In a process of executing the third trickle period to the e^{th} trickle period, the first network node adds, in sum (i) based on the count information, a quantity of first multicast packets that are received before a sending moment T, then compares the value of sum (i) with the redundancy constant K, and if the value of sum (i) is equal to the redundancy constant K, stops broadcast of the first multicast packet in a corresponding trickle period, or if the value of sum (i) is less than the redundancy constant K, broadcasts the multicast packet to each neighboring network node at the sending moment T in a corresponding trickle period.

It should be noted that, in a process in which the first network node executes the third trickle period to the e^{th} trickle period, after broadcast of the first multicast packet is stopped in any one of the trickle periods, the first network node stops the trickle timer corresponding to the first multicast packet, and no longer executes a subsequent trickle period.

In addition, in the process in which the first network node executes the third trickle period to the e^{th} trickle period, as long as the first multicast packet is broadcast in any one of the trickle periods, the first network node adds count information to a broadcast second multicast packet, where the count information is used to indicate that the first network node sends the first multicast packet a j^{th} time.

In this embodiment, the first multicast packet broadcast by the first network node includes the count information. A specific implementation process thereof is already described in detail in step 701 above. Details are not described herein again.

1111. The first network node stops broadcast of the first multicast packet, and stops the trickle timer.

When the first network node determines that all the neighboring network nodes have received the first multicast packet, the first network node stops broadcast of the first multicast packet, stops the trickle timer corresponding to the first multicast packet, and no longer executes a subsequent trickle period in the trickle algorithm.

1112. The first network node receives a control packet.

After the first network node stops the trickle timer corresponding to the first multicast packet, the first network node receives the control packet, where the control packet includes a control instruction, and the control instruction is used to instruct the first network node to restart the trickle timer.

It should be noted that, the control packet may be sent by an internet of things gateway to the first network node, or may be sent by a server to the first network node. This is not limited herein.

1113. The first network node restarts the trickle timer.

After the first network node receives the control packet, the first network node restarts, according to the control instruction in the control packet, the trickle timer corresponding to the first multicast packet, and re-executes the trickle algorithm corresponding to the trickle counter.

It should be noted that, after the first network node restarts the trickle timer corresponding to the first multicast packet, the first network node sets the redundancy constant of the first trickle period to an integer greater than the quantity of neighboring network nodes, and sets, to an integer equal to the quantity of neighboring network nodes, the redundancy constants respectively corresponding to the second trickle period to the e^{th} trickle period.

In this embodiment, the first network node determines, based on the count information included in the first multicast packet, that the first multicast packet is sent by the second network node the i^{th} time, and records, in sum (i), the first multicast packets that are sent the i^{th} time, thereby ensuring that quantities that are of the first multicast packets and that are recorded in sum (i) correspond to different second network nodes. The first network node sets the redundancy constant in the trickle algorithm to a value greater than the quantity of neighboring network nodes in the first trickle period, to ensure that after receiving the first multicast packet the first time, the first network node broadcasts the first multicast packet to all the neighboring network nodes, so that the neighboring network nodes can receive the first multicast packet, and a delay of receiving the first multicast packet by the neighboring network nodes can be reduced. The first network node sets the redundancy constant in the trickle algorithm to a value equal to the quantity of neighboring network nodes in the second trickle period to the e^{th} trickle period, and determines, in each of the second trickle period to the e^{th} trickle period based on a comparison result of comparing the value of sum (i) with the redundancy constant, whether to broadcast the first multicast packet. Therefore, the first network node can accurately determine, based on the value of sum (i) and the flexibly set redundancy constant, whether all the neighboring network nodes have received the first multicast packet, to improve accuracy of broadcasting the first multicast packet by the first network node, thereby saving network resources.

The multicast packet processing method in the embodiments of this application is described above, and a network device in the embodiments of this application is described below with reference to the accompanying drawings. The network device in the embodiments of this application may be a first network node or a chip system. The network devices in different roles have different functions. It should be noted that, only an example in which the network device is a first network node is used for description in the embodiments of this application and subsequent embodiments.

FIG. 14 is a schematic block diagram of a network device 140 according to an embodiment of this application. The network device may be a first network node, and the network device 140 includes:
a receiving unit 1401, configured to receive a first multicast packet sent by a second network node, where the second network node is any neighboring network node of the first network node, and the neighboring network node is a network node connected to the first network node;
a processing unit 1402, configured to:
   start a trickle timer corresponding to the first multicast packet, and execute a first trickle period in e trickle periods of the trickle timer, where e is an integer greater than or equal to 2; and
   determine whether a quantity Z1 of first multicast packets that are received in the first trickle period before a sending moment T1 is less than or equal to a first redundancy constant K1, where K1 is an integer greater than a quantity of neighboring network nodes, and T1 is a preset moment in the first trickle period; and
   a broadcast unit 1403, configured to: when Z1 is less than or equal to K1, broadcast the first multicast packet.

The processing unit 1402 is further configured to: determine whether a quantity Z2 of first multicast packets that are received in a second trickle period before a sending moment T2 is greater than or equal to a second redundancy constant K2, where K2 is an integer equal to the quantity of neighboring network nodes, and T2 is a preset moment in the second trickle period; and when Z2 is greater than or equal to K2, stop broadcast of the first multicast packet.

The broadcast unit 1403 is further configured to: when Z2 is less than K2, broadcast the first multicast packet.

In this embodiment, the processing unit 1402 is further configured to: when e is greater than or equal to 3, execute a trickle algorithm corresponding to a third trickle period to an e^{th} trickle period, where a redundancy constant corresponding to each of the third trickle period to the e^{th} trickle period is an integer equal to the quantity of neighboring network nodes.

In this embodiment, the first multicast packet includes count information used to indicate that the second network node sends the first multicast packet an i^{th} time, where i is an integer greater than 0; and the processing unit 1402 is specifically configured to: determine, based on count information included in the first multicast packet that is received before T1, a quantity of first multicast packets that are sent the i^{th} time; and
when the quantity of first multicast packets that are sent the i^{th} time is less than or equal to K1, determine that Z1 is less than or equal to K1.

In this embodiment, the processing unit 1402 is specifically configured to:
determine, based on count information included in the first multicast packet that is received before T2, the quantity of first multicast packets that are sent the i^{th} time; and
when the quantity of first multicast packets that are sent the i^{th} time is equal to K2, determine that the quantity Z2 of first multicast packets is equal to K2; or
when the quantity of first multicast packets that are sent the i^{th} time is less than K2, determine that the quantity Z2 of first multicast packets is less than K2; and
the processing unit 1402 is further configured to: when Z2 is equal to K2, stop the trickle timer corresponding to the first multicast packet.

In this embodiment, the broadcast unit 1403 is further configured to broadcast the first multicast packet, where the first multicast packet includes count information used to indicate that the first network node sends the first multicast packet a j^{th} time, and j is an integer greater than 0.

In this embodiment, the processing unit 1402 is specifically configured to:
determine whether the first multicast packet that is received before T1 is sent the i^{th} time, and add, to a trickle counter (i) corresponding to the i^{th} time, the quantity of first multicast packets that are sent the i^{th} time; and
determine that a value of the counter (i) is the quantity of first multicast packets that are sent the i^{th} time.

In this embodiment, the processing unit 1402 is specifically configured to:
determine whether the first multicast packet that is received before T2 is sent the i^{th} time, and add, to a trickle counter (i) corresponding to the i^{th} time, the quantity of first multicast packets that are sent the i^{th} time; and
determine that a value of the counter (i) is the quantity of first multicast packets that are sent the i^{th} time.

In this embodiment, the processing unit 1402 is further configured to: obtain the quantity of neighboring network nodes, and set K1 or K2 based on the quantity of neighboring network nodes.

In this embodiment, the broadcast unit 1403 is further configured to:
broadcast N second multicast packets, where the N second multicast packets are different from each other, the second multicast packet includes indication information, the indication information is used to instruct the second network node that has received the second multicast packet to broadcast the second multicast packet once, and N is an integer greater than or equal to 1;
the receiving unit 1401 is further configured to receive each of the N second multicast packets; and
the processing unit 1402 is further configured to:
   determine a quantity of each of the N second multicast packets; and
   determine a maximum quantity of second multicast packets in the second multicast packets as the quantity of neighboring network nodes.
In this embodiment, the processing unit 1402 determines, based on the count information included in the first multicast packet, that the first multicast packet is sent by the second network node the i^{th} time, and records, in sum (i), the first multicast packets that are sent the i^{th} time, thereby ensuring that quantities that are of the first multicast packets and that are recorded in sum (i) correspond to different second network nodes. The processing unit 1402 sets the redundancy constant in the trickle algorithm to a value greater than the quantity of neighboring network nodes in the first trickle period, to ensure that after the first network node receives the first multicast packet the first time, the broadcast unit 1403 broadcasts the first multicast packet to all the neighboring network nodes, so that the neighboring network nodes can receive the first multicast packet. The processing unit 1402 sets the redundancy constant in the trickle algorithm to a value equal to the quantity of neighboring network nodes in the second trickle period to the e^{th} trickle period, and determines, in each of the second trickle period to the e^{th} trickle period based on a comparison result of comparing a value of sum (i) with the redundancy constant, whether to broadcast the first multicast packet. Therefore, the first network node can accurately determine, based on the value of sum (i) and the flexibly set redundancy constant, whether all the neighboring network nodes have received the first multicast packet, to improve accuracy of broadcasting the first multicast packet by the first network node, thereby saving network resources.

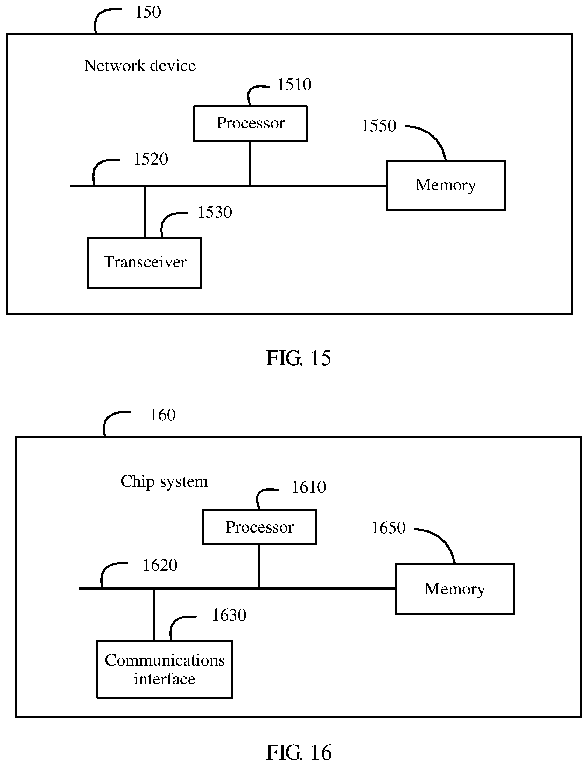

FIG. 15 is a schematic diagram of a hardware structure of a network device 150 according to an embodiment of this application. The network device 150 may be a first network node, and the network device 150 includes at least one processor 1510, a memory 1550, and a transceiver 1530. The transceiver may include a receiver and a transmitter. The memory 1550 may include a read-only memory and/or a random access memory, and provide an operation instruction and data to the processor 1510. A part of the memory 1550 may further include a non-volatile random access memory (NVRAM).

In some implementations, the memory 1550 stores the following elements: an executable module or a data structure, or a subset thereof, or an extended set thereof.

In this embodiment of this application, the operation instruction stored in the memory 1550 (the operation instruction may be stored in an operating system) is invoked to perform a corresponding operation. The processor 1510 controls an operation of the network device 150, and the processor 1510 may also be referred to as a CPU (Central Processing Unit, central processing unit). The memory 1550 may include a read-only memory and a random access memory, and provide an instruction and data to the processor 1510. Apart of the memory 1550 may further include a non-volatile random access memory (NVRAM). In specific application, components of the network device 150 are coupled together by using a bus system 1520. In addition to a data bus, the bus system 1520 may further include a power bus, a control bus, a status signal bus, and the like. However, for clear description, various types of buses in the figure are marked as the bus system 1520.

The methods disclosed in the foregoing embodiments of this application may be applied to the processor 1510, or implemented by the processor 1510. The processor 1510 may be an integrated circuit chip and has a signal processing capability. In an implementation process, steps of the foregoing methods can be implemented by using a hardware integrated logical circuit in the processor 1510, or by using instructions in a form of software. The processor 1510 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor 1510 may implement or perform the methods, the steps, and the logical block diagrams that are disclosed in the embodiments of this application. The general-purpose processor may be a microprocessor, or the processor may be any conventional processor or the like. Steps of the methods disclosed with reference to the embodiments of this application may be directly executed and completed by using a hardware decoding processor, or may be executed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1550. The memory 1550 may be a physically independent unit, or may be integrated into the processor 1510. The processor 1510 reads information from the memory 1550, and completes the steps of the foregoing methods in combination with hardware of the processor 1510.

Optionally, the transceiver 1530 in this embodiment may be configured to perform content related to receiving and sending in the content described in step 201 and step 202 in the embodiment corresponding to FIG. 2, or may perform content related to receiving and sending described in step 701 and step 705 in the embodiment corresponding to FIG. 7, or may perform content related to receiving and sending described in step 1101, step 1103, step 1106, step 1109, and step 1112 in the embodiment corresponding to FIG. 11, or message sending and receiving steps of the first network node in another optional embodiment.

The processor 1510 may be configured to perform content respectively described in step 203, step 204, and step 205 in the embodiment corresponding to FIG. 2, or may be configured to perform content respectively described in step 702, step 703, and step 704 in the embodiment corresponding to FIG. 7, or may be configured to perform content respectively described in step 1102, step 1104, step 1105, step 1107, step 1108, step 1110, step 1111, and step 1112 in the embodiment corresponding to FIG. 11, or a data processing step of the first network node in another optional embodiment.

FIG. 16 is a schematic diagram of a hardware structure of a chip system 160 according to an embodiment of this application. The chip system 160 includes at least one processor 1610, a memory 1650, and a communications interface 1630. The memory 1650 may include a read-only memory and a random access memory, and provide an operation instruction and data to the processor 1610. A part of the memory 1650 may further include a non-volatile random access memory (NVRAM).

In some implementations, the memory 1650 stores the following elements: an executable module or a data structure, or a subset thereof, or an extended set thereof.

In this embodiment of this application, the operation instruction stored in the memory 1650 (the operation instruction may be stored in an operating system) is invoked to perform a corresponding operation.

In a possible implementation, a structure of the chip system is similar to that of a chip system used by a network device, but different apparatuses use different chip systems to implement respective functions.

The processor 1610 controls an operation of the chip system, and the processor 1610 may also be referred to as a CPU (Central Processing Unit, central processing unit). The memory 1650 may include a read-only memory and a random access memory, and provide an instruction and data to the processor 1610. A part of the memory 1650 may further include a non-volatile random access memory (NVRAM). In specific application, components of the chip system 160 are coupled together by using a bus system 1620. In addition to a data bus, the bus system 1620 may further include a power bus, a control bus, a status signal bus, and the like. However, for clear description, various types of buses in the figure are marked as the bus system 1620.

The methods disclosed in the foregoing embodiments of this application may be applied to the processor 1610, or implemented by the processor 1610. The processor 1610 may be an integrated circuit chip and has a signal processing capability. In an implementation process, steps of the foregoing methods can be implemented by using a hardware integrated logical circuit in the processor 1610, or by using instructions in a form of software. The processor 1610 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor 1610 may implement or perform the methods, the steps, and the logical block diagrams that are disclosed in the embodiments of this application. The general-purpose processor may be a microprocessor, or the processor may be any conventional processor or the like. Steps of the methods disclosed with reference to the embodiments of this application may be directly executed and completed by using a hardware decoding processor, or may be executed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1650. The memory 1650 may be a physically independent unit, or may be integrated into the processor 1610. The processor 1610 reads information from the memory 1650, and completes the steps of the foregoing methods in combination with hardware of the processor 1610.

Optionally, the transceiver 1630 in this embodiment may be configured to perform content related to receiving and sending in the content described in step 201 and step 202 in the embodiment corresponding to FIG. 2, or may perform content related to receiving and sending described in step 701 and step 705 in the embodiment corresponding to FIG. 7, or may perform content related to receiving and sending described in step 1101, step 1103, step 1106, step 1109, and step 1112 in the embodiment corresponding to FIG. 11, or message sending and receiving steps of the first network node in another optional embodiment.

The processor 1610 may be configured to perform content respectively described in step 203, step 204, and step 205 in the embodiment corresponding to FIG. 2, or may be configured to perform content respectively described in step 702, step 703, and step 704 in the embodiment corresponding to FIG. 7, or may be configured to perform content respectively described in step 1102, step 1104, step 1105, step 1107, step 1108, step 1110, step 1111, and step 1112 in the embodiment corresponding to FIG. 11, or a data processing step of the first network node in another optional embodiment.

All or some of the foregoing embodiments may be implemented by using software, hardware, firmware, or any combination thereof. When software is used to implement the embodiments, the embodiments may be implemented completely or partially in a form of a computer program product.

The computer program product includes one or more computer instructions. When the computer program instructions are loaded and executed on the computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD)), or the like.

Persons of ordinary skill in the art may understand that all or some of the steps of the methods in the embodiments may be completed by a program instructing related hardware. The program may be stored in a computer-readable storage medium. The storage medium may include: a ROM, a RAM, a magnetic disk, an optical disc, or the like.

The multicast packet processing method, the device, the computer-readable storage medium, and the chip system provided in the embodiments of this application are described in detail above. The principle and the implementations of this application are described herein through specific examples. The description of the foregoing embodiments is merely provided to help understand the method and core ideas of this application. In addition, persons of ordinary skill in the art can make variations and modifications to this application in terms of the specific implementations and application scopes according to the ideas of this application. In conclusion, the content of this specification shall not be construed as a limit to this application.

In this specification, the claims, and the accompanying drawings of this application, the terms "first", "second", and so on are intended to distinguish between similar objects but do not necessarily indicate a specific order or sequence. It should be understood that the data termed in such a way is interchangeable in proper cases, so that the embodiments described herein can be implemented in other orders than the order illustrated or described herein. Moreover, the terms "include", "have", or any other variant thereof are intended to cover a non-exclusive inclusion. The naming or numbering of the steps appearing in this application does not mean that the steps in the method procedures need to be performed in a time/logical order indicated by the naming or numbering. An execution order of the steps in the procedures that have been named or numbered can be changed according to the technical objective to be achieved, as long as same or similar technical effects can be achieved.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A multicast packet processing method, comprising:
receiving (201), by a first network node, a first multicast packet sent by a second network node, wherein the second network node is any neighboring network node of the first network node, and the neighboring network node is a network node connected to the first network node;
**characterized by**
starting (203), by the first network node, a trickle timer corresponding to the first multicast packet, and executing a first trickle period in e trickle periods of the trickle timer, wherein e is an integer greater than or equal to 2;
determining (204), by the first network node, whether a quantity Z1 of first multicast packets that are received in the first trickle period before a sending moment T1 is less than or equal to a first redundancy constant K1, wherein K1 is an integer greater than a quantity of neighboring network nodes, and T1 is a preset moment in the first trickle period;
if Z1 is less than or equal to K1, broadcasting, by the first network node, the first multicast packet;
determining (205), by the first network node, whether a quantity Z2 of first multicast packets that are received in a second trickle period before a sending moment T2 is greater than or equal to a second redundancy constant K2, wherein K2 is an integer equal to the quantity of neighboring network nodes, and T2 is a preset moment in the second trickle period; and
if Z2 is greater than or equal to K2, stopping, by the first network node, broadcast of the first multicast packet in the second trickle period; or
if Z2 is less than K2, broadcasting, by the first network node, the first multicast packet.

2. The method according to claim 1, wherein the method further comprises:
when e is greater than or equal to 3, executing, by the first network node, a trickle algorithm corresponding to a third trickle period to an e^{th} trickle period, wherein a redundancy constant corresponding to each of the third trickle period to the e^{th} trickle period is equal to the quantity of neighboring network nodes.

3. The method according to claim 1 or 2, wherein the first multicast packet comprises count information used to indicate that the second network node sends the first multicast packet an i^{th} time, wherein i is an integer greater than 0; and
the determining, by the first network node, whether a quantity Z1 of first multicast packets that are received in the first trickle period before a sending moment T1 is less than or equal to a first redundancy constant K1 comprises:
determining, by the first network node based on count information comprised in the first multicast packet that is received before T1, a quantity of first multicast packets that are sent by the second network node the i^{th} time; and
if the quantity of first multicast packets that are sent the i^{th} time is less than or equal to K1, determining, by the first network node, that Z1 is less than or equal to K1.

4. The method according to any one of claims 1 to 3, wherein the determining, by the first network node,
whether a quantity Z2 of first multicast packets that are received in a second trickle period before a sending moment T2 is greater than or equal to a second redundancy constant K2 comprises:
determining, by the first network node based on count information comprised in the first multicast packet that is received before T2, the quantity of first multicast packets that are sent the i^{th} time; and
if the quantity of first multicast packets that are sent the i^{th} time is equal to K2, determining, by the first network node, that the quantity Z2 of first multicast packets is equal to K2; or
if the quantity of first multicast packets that are sent the i^{th} time is less than K2, determining, by the first network node, that the quantity Z2 of first multicast packets is less than K2; and
when Z2 is equal to K2, after the stopping, by the first network node, broadcast of the first multicast packet in the second trickle period, the method further comprises:
stopping, by the first network node, the trickle timer corresponding to the first multicast packet.

5. The method according to claim 3, wherein the broadcasting, by the first network node, the first multicast packet comprises:
broadcasting, by the first network node, the first multicast packet, wherein the first multicast packet comprises count information used to indicate that the first network node sends the first multicast packet a j^{th} time, and j is an integer greater than 0.

6. A network device, wherein the network device is a first network node, and the network device comprises:
a receiving unit (1401), configured to receive a first multicast packet sent by a second network node, wherein the second network node is any neighboring network node of the first network node, and the neighboring network node is a network node connected to the first network node;
**characterized by**
a processing unit (1402), configured to:
start a trickle timer corresponding to the first multicast packet, and execute a first trickle period in e trickle periods of the trickle timer, wherein e is an integer greater than or equal to 2; and
determine whether a quantity Z1 of first multicast packets that are received in the first trickle period before a sending moment T1 is less than or equal to a first redundancy constant K1, wherein K1 is an integer greater than a quantity of neighboring network nodes, and T1 is a preset moment in the first trickle period; and
a broadcast unit (1403), configured to:
when Z1 is less than or equal to K1, broadcast the first multicast packet, wherein
the processing unit is further configured to:
determine whether a quantity Z2 of first multicast packets that are received in a second trickle period before a sending moment T2 is greater than or equal to a second redundancy constant K2, wherein K2 is an integer equal to the quantity of neighboring network nodes, and T2 is a preset moment in the second trickle period; and
when Z2 is greater than or equal to K2, stop broadcast of the first multicast packet; and
the broadcast unit is further configured to:
when Z2 is less than K2, broadcast the first multicast packet.

7. The network device according to claim 6, wherein the processing unit is further configured to: when e is greater than or equal to 3, execute a trickle algorithm corresponding to a third trickle period to an e^{th} trickle period,
wherein a redundancy constant corresponding to each of the third trickle period to the e^{th} trickle period is an integer equal to the quantity of neighboring network nodes.

8. The network device according to claim 6 or 7, wherein the first multicast packet comprises count information used to indicate that the second network node sends the first multicast packet an i^{th} time, wherein i is an integer greater than 0; and
the processing unit is specifically configured to:
determine, based on count information comprised in the first multicast packet that is received before T1, a quantity of first multicast packets that are sent the i^{th} time; and
when the quantity of first multicast packets that are sent the i^{th} time is less than or equal to K1, determine that Z1 is less than or equal to K1.

9. The network device according to any one of claims 6 to 8, wherein the processing unit is specifically configured to:
determine, based on count information comprised in the first multicast packet that is received before T2, the quantity of first multicast packets that are sent by the second network node the i^{th} time; and
when the quantity of first multicast packets that are sent the i^{th} time is equal to K2, determine that the quantity Z2 of first multicast packets is equal to K2; or
when the quantity of first multicast packets that are sent the i^{th} time is less than K2, determine that the quantity Z2 of first multicast packets is less than K2; and
the processing unit is further configured to: when Z2 is equal to K2, stop the trickle timer corresponding to the first multicast packet.

10. The network device according to claim 8, wherein the broadcast unit is further configured to broadcast the first multicast packet, wherein the first multicast packet comprises count information used to indicate that the first network node sends the first multicast packet a j^{th} time, and j is an integer greater than 0.

11. The network device according to claim 8, wherein the processing unit is specifically configured to:
determine whether the first multicast packet that is received before T1 is sent the i^{th} time, and add, to a trickle counter (i) corresponding to the i^{th} time, the quantity of first multicast packets that are sent the i^{th} time; and
determine that a value of the counter (i) is the quantity of first multicast packets that are sent the i^{th} time.

12. The network device according to claim 9, wherein the processing unit is specifically configured to:
determine whether the first multicast packet that is received before T2 is sent the i^{th} time, and add, to a trickle counter (i) corresponding to the i^{th} time, the quantity of first multicast packets that are sent the i^{th} time; and
determine that a value of the counter (i) is the quantity of first multicast packets that are sent the i^{th} time.

13. The network device according to claim 6, wherein the processing unit is further configured to: obtain the quantity of neighboring network nodes, and set K1 or K2 based on the quantity of neighboring network nodes.

14. The network device according to claim 13, wherein the broadcast unit is further configured to: broadcast N second multicast packets, wherein the N second multicast packets are different from each other, the second multicast packet comprises indication information, the indication information is used to instruct the second network node that has received the second multicast packet to broadcast the second multicast packet once, and N is an integer greater than or equal to 1;
the receiving unit is further configured to receive each of the N second multicast packets; and
the processing unit is further configured to:
determine a quantity of each of the N second multicast packets; and
determine a maximum quantity of second multicast packets in the second multicast packets as the quantity of neighboring network nodes.

15. A computer-readable storage medium, comprising an instruction, wherein when the instruction is run on a computer, the computer is enabled to perform the method according to any one of claims 1 to 5.

## Patentansprüche

1. Multicast-Paketverarbeitungsverfahren, umfassend:
Empfangen (201), durch einen ersten Netzwerkknoten, eines ersten Multicast-Pakets, das durch einen zweiten Netzwerkknoten gesendet wird, wobei der zweite Netzwerkknoten ein beliebiger benachbarter Netzwerkknoten des ersten Netzwerkknotens ist und der benachbarte Netzwerkknoten ein Netzwerkknoten ist, der mit dem ersten Netzwerkknoten verbunden ist;
**gekennzeichnet durch**
Starten (203), durch den ersten Netzwerkknoten, eines Trickle-Timers, der dem ersten Multicast-Paket entspricht, und Ausführen einer ersten Trickle-Periode in e Trickle-Perioden des Trickle-Timers, wobei e eine ganze Zahl größer als oder gleich 2 ist;
Bestimmen (204) durch den ersten Netzwerkknoten, ob eine Anzahl Z1 von ersten Multicast-Paketen, die in der ersten Trickle-Periode vor einem Sendemoment T1 empfangen werden, kleiner als oder gleich einer ersten Redundanzkonstante K1 ist, wobei K1 eine ganze Zahl größer als eine Anzahl von benachbarten Netzwerkknoten ist und T1 ein voreingestellter Moment in der ersten Trickle-Periode ist;
falls Z1 kleiner als oder gleich K1 ist, Broadcasten, durch den ersten Netzwerkknoten, des ersten Multicast-Pakets;
Bestimmen (205), durch den ersten Netzwerkknoten, ob eine Anzahl Z2 von ersten Multicast-Paketen, die in einer zweiten Trickle-Periode vor einem Sendemoment T2 empfangen werden, größer als oder gleich einer zweiten Redundanzkonstante K2 ist, wobei K2 eine ganze Zahl gleich der Anzahl von benachbarten Netzwerkknoten ist und T2 ein voreingestellter Moment in der zweiten Trickle-Periode ist; und
falls Z2 größer als oder gleich K2 ist, Stoppen, durch den ersten Netzwerkknoten, des Broadcastens des ersten Multicast-Pakets in der zweiten Trickle-Periode; oder
falls Z2 kleiner als K2 ist, Broadcasten, durch den ersten Netzwerkknoten, des ersten Multicast-Pakets.

2. Verfahren nach Anspruch 1, wobei das Verfahren ferner umfasst:
wenn e größer als oder gleich 3 ist, Ausführen, durch den ersten Netzwerkknoten, eines Trickle-Algorithmus, der einer dritten Trickle-Periode bis zu einer e^{-ten} Trickle-Periode entspricht, wobei eine Redundanzkonstante, die jeder der dritten Trickle-Periode bis zu der e^{-ten} Trickle-Periode entspricht, gleich der Anzahl von benachbarten Netzwerkknoten ist.

3. Verfahren nach Anspruch 1 oder 2, wobei das erste Multicast-Paket Zählinformationen umfasst, die verwendet werden, um anzugeben, dass der zweite Netzwerkknoten das erste Multicast-Paket ein i^{-tes} Mal sendet, wobei i eine ganze Zahl größer als 0 ist; und
das Bestimmen, durch den ersten Netzwerkknoten, ob eine Anzahl Z1 von ersten Multicast-Paketen, die in der ersten Trickle-Periode vor einem Sendemoment T1 empfangen werden, kleiner als oder gleich einer ersten Redundanzkonstante K1 ist, umfasst:
Bestimmen, durch den ersten Netzwerkknoten basierend auf Zählinformationen, die in dem ersten Multicast-Paket, das vor T1 empfangen wird, enthalten sind, einer Anzahl von ersten Multicast-Paketen, die durch den zweiten Netzwerkknoten das i^{-te} Mal gesendet werden; und
falls die Anzahl von ersten Multicast-Paketen, die das i^{-te} Mal gesendet werden, kleiner als oder gleich K1 ist, Bestimmen, durch den ersten Netzwerkknoten, dass Z1 kleiner als oder gleich K1 ist.

4. Verfahren nach einem der Ansprüche 1 bis 3, wobei das Bestimmen, durch den ersten Netzwerkknoten, ob eine Anzahl Z2 von ersten Multicast-Paketen, die in einer zweiten Trickle-Periode vor einem Sendemoment T2 empfangen werden, größer als oder gleich einer zweiten Redundanzkonstante K2 ist, umfasst:
Bestimmen, durch den ersten Netzwerkknoten basierend auf Zählinformationen, die in dem ersten Multicast-Paket, das vor T2 empfangen wird, enthalten sind, der Anzahl von ersten Multicast-Paketen, die das i^{-te} Mal gesendet werden; und
falls die Anzahl von ersten Multicast-Paketen, die das i^{-te} Mal gesendet werden, gleich K2 ist, Bestimmen, durch den ersten Netzwerkknoten, dass die Anzahl Z2 von ersten Multicast-Paketen gleich K2 ist; oder
falls die Anzahl von ersten Multicast-Paketen, die das i^{-te} Mal gesendet werden, kleiner als K2 ist, Bestimmen, durch den ersten Netzwerkknoten, dass die Anzahl Z2 von ersten Multicast-Paketen kleiner als K2 ist; und
wenn Z2 gleich K2 ist, nach dem Stoppen, durch den ersten Netzwerkknoten, des Broadcastens des ersten Multicast-Pakets in der zweiten Trickle-Periode das Verfahren ferner umfasst:
Stoppen, durch den ersten Netzwerkknoten, des Trickle-Timers, der dem ersten Multicast-Paket entspricht.

5. Verfahren nach Anspruch 3, wobei das Broadcasten, durch den ersten Netzwerkknoten, des ersten Multicast-Pakets umfasst:
Broadcasten, durch den ersten Netzwerkknoten, des ersten Multicast-Pakets, wobei das erste Multicast-Paket Zählinformationen umfasst, die verwendet werden, um anzugeben, dass der erste Netzwerkknoten das erste Multicast-Paket ein j^{-tes} Mal sendet und j eine ganze Zahl größer als 0 ist.

6. Netzwerkvorrichtung, wobei die Netzwerkvorrichtung ein erster Netzwerkknoten ist und die Netzwerkvorrichtung umfasst:
eine Empfangseinheit (1401), die konfiguriert ist, um ein erstes Multicast-Paket, das durch einen zweiten Netzwerkknoten gesendet wird, zu empfangen, wobei der zweite Netzwerkknoten ein beliebiger benachbarter Netzwerkknoten des ersten Netzwerkknotens ist und der benachbarte Netzwerkknoten ein Netzwerkknoten ist, der mit dem ersten Netzwerkknoten verbunden ist;
**gekennzeichnet durch**
eine Verarbeitungseinheit (1402), die konfiguriert ist zum:
Starten eines Trickle-Timers, der dem ersten Multicast-Paket entspricht, und Ausführen einer ersten Trickle-Periode in e Trickle-Perioden des Trickle-Timers, wobei e eine ganze Zahl größer als oder gleich 2 ist; und
Bestimmen, ob eine Anzahl Z1 von ersten Multicast-Paketen, die in der ersten Trickle-Periode vor einem Sendemoment T1 empfangen werden, kleiner als oder gleich einer ersten Redundanzkonstante K1 ist, wobei K1 eine ganze Zahl größer als eine Anzahl von benachbarten Netzwerkknoten ist und T1 ein voreingestellter Moment in der ersten Trickle-Periode ist; und
eine Broadcast-Einheit (1403), die konfiguriert ist zum:
wenn Z1 kleiner als oder gleich K1 ist, Broadcasten des ersten Multicast-Pakets, wobei
die Verarbeitungseinheit ferner konfiguriert ist zum:
Bestimmen, ob eine Anzahl Z2 von ersten Multicast-Paketen, die in einer zweiten Trickle-Periode vor einem Sendemoment T2 empfangen werden, größer als oder gleich einer zweiten Redundanzkonstante K2 ist, wobei K2 eine ganze Zahl gleich der Anzahl von benachbarten Netzwerkknoten ist und T2 ein voreingestellter Moment in der zweiten Trickle-Periode ist; und
wenn Z2 größer als oder gleich K2 ist, Stoppen des Broadcastens des ersten Multicast-Pakets; und
die Broadcast-Einheit ferner konfiguriert ist zum:
wenn Z2 kleiner als K2 ist, Broadcasten des ersten Multicast-Pakets.

7. Netzwerkvorrichtung nach Anspruch 6, wobei die Verarbeitungseinheit ferner konfiguriert ist zum: wenn e größer als oder gleich 3 ist, Ausführen eines Trickle-Algorithmus, der einer dritten Trickle-Periode bis zu einer e^{-ten} Trickle-Periode entspricht, wobei eine Redundanzkonstante, die jeder der dritten Trickle-Periode bis zu der e^{-ten} Trickle-Periode entspricht, eine ganze Zahl gleich der Anzahl von benachbarten Netzwerkknoten ist.

8. Netzwerkvorrichtung nach Anspruch 6 oder 7, wobei das erste Multicast-Paket Zählinformationen umfasst, die verwendet werden, um anzugeben, dass der zweite Netzwerkknoten das erste Multicast-Paket ein i^{-tes} Mal sendet, wobei i eine ganze Zahl größer als 0 ist; und
die Verarbeitungseinheit speziell konfiguriert ist zum:
Bestimmen, basierend auf Zählinformationen, die in dem ersten Multicast-Paket, das vor T1 empfangen wird, enthalten sind, einer Anzahl von ersten Multicast-Paketen, die das i^{-te} Mal gesendet werden; und
wenn die Anzahl von ersten Multicast-Paketen, die das i^{-te} Mal gesendet werden, kleiner als oder gleich K1 ist, Bestimmen, dass Z1 kleiner als oder gleich K1 ist.

9. Netzwerkvorrichtung nach einem der Ansprüche 6 bis 8, wobei die Verarbeitungseinheit speziell konfiguriert ist zum:
Bestimmen, basierend auf Zählinformationen, die in dem ersten Multicast-Paket, das vor T2 empfangen wird, enthalten sind, der Anzahl von ersten Multicast-Paketen, die durch den zweiten Netzwerkknoten das i^{-te} Mal gesendet werden; und
wenn die Anzahl von ersten Multicast-Paketen, die das i^{-te} Mal gesendet werden, gleich K2 ist, Bestimmen, dass die Anzahl Z2 von ersten Multicast-Paketen gleich K2 ist; oder
wenn die Anzahl von ersten Multicast-Paketen, die das i^{-te} Mal gesendet werden, kleiner als K2 ist, Bestimmen, dass die Anzahl Z2 von ersten Multicast-Paketen kleiner als K2 ist; und
die Verarbeitungseinheit ferner konfiguriert ist zum: wenn Z2 gleich K2 ist, Stoppen des Trickle-Timers, der dem ersten Multicast-Paket entspricht.

10. Netzwerkvorrichtung nach Anspruch 8, wobei die Broadcast-Einheit ferner konfiguriert ist, um das erste Multicast-Paket zu broadcasten, wobei das erste Multicast-Paket Zählinformationen umfasst, die verwendet werden, um anzugeben, dass der erste Netzwerkknoten das erste Multicast-Paket ein j^{-tes} Mal sendet, und j eine ganze Zahl größer als 0 ist.

11. Netzwerkvorrichtung nach Anspruch 8, wobei die Verarbeitungseinheit speziell konfiguriert ist zum:
Bestimmen, ob das erste Multicast-Paket, das vor T1 empfangen wird, das i^{-te} Mal gesendet wird, und Hinzufügen, zu einem Trickle-Zähler (i), der dem i^{-ten} Mal entspricht, der Anzahl von ersten Multicast-Paketen, die das i^{-te} Mal gesendet werden; und
Bestimmen, dass ein Wert des Zählers (i) die Anzahl von ersten Multicast-Paketen, die das i^{-te} Mal gesendet werden, ist.

12. Netzwerkvorrichtung nach Anspruch 9, wobei die Verarbeitungseinheit speziell konfiguriert ist zum:
Bestimmen, ob das erste Multicast-Paket, das vor T2 empfangen wird, das i^{-te} Mal gesendet wird, und Hinzufügen, zu einem Trickle-Zähler (i), der dem i^{-ten} Mal entspricht, der Anzahl von ersten Multicast-Paketen, die das i^{-te} Mal gesendet werden; und
Bestimmen, dass ein Wert des Zählers (i) die Anzahl von ersten Multicast-Paketen, die das i^{-te} Mal gesendet werden, ist.

13. Netzwerkvorrichtung nach Anspruch 6, wobei die Verarbeitungseinheit ferner konfiguriert ist zum: Erhalten der Anzahl von benachbarten Netzwerkknoten und Einstellen von K1 oder K2 basierend auf der Anzahl von benachbarten Netzwerkknoten.

14. Netzwerkvorrichtung nach Anspruch 13, wobei die Broadcast-Einheit ferner konfiguriert ist zum: Broadcasten von N zweiten Multicast-Paketen, wobei sich die N zweiten Multicast-Pakete voneinander unterscheiden, wobei das zweite Multicast-Paket Angabeinformationen umfasst, wobei die Angabeinformationen verwendet werden, um den zweiten Netzwerkknoten, der das zweite Multicast-Paket empfangen hat, anzuweisen, das zweite Multicast-Paket einmal zu broadcasten, und N eine ganze Zahl größer als oder gleich 1 ist;
die Empfangseinheit ferner konfiguriert ist, um jedes der N zweiten Multicast-Pakete zu empfangen; und
die Verarbeitungseinheit ferner konfiguriert ist zum:
Bestimmen einer Anzahl von jedem der N zweiten Multicast-Pakete; und
Bestimmen einer maximalen Anzahl von zweiten Multicast-Paketen in den zweiten Multicast-Paketen als die Anzahl von benachbarten Netzwerkknoten.

15. Computerlesbares Speichermedium, umfassend eine Anweisung, wobei, wenn die Anweisung auf einem Computer laufen gelassen wird, der Computer aktiviert wird, um das Verfahren nach einem der Ansprüche 1 bis 5 durchzuführen.

## Revendications

1. Procédé de traitement de paquet multidiffusion, comprenant :
la réception (201), par un premier noeud de réseau, d'un premier paquet multidiffusion envoyé par un second noeud de réseau, le second noeud de réseau étant un quelconque noeud de réseau voisin du premier noeud de réseau, et le noeud de réseau voisin étant un noeud de réseau connecté au premier noeud de réseau ;
**caractérisé par**
le démarrage (203), par le premier noeud de réseau, d'un temporisateur de maintien correspondant au premier paquet multidiffusion, et l'exécution d'une première période de maintien dans e périodes de maintien du temporisateur de maintien, e étant un entier supérieur ou égal à 2 ;
le fait de déterminer (204), par le premier noeud de réseau, si une quantité Z1 de premiers paquets multidiffusion qui sont reçus dans la première période de maintien avant un moment d'envoi T1 est inférieure ou égale à une première constante de redondance K1, K1 étant un entier supérieur à une quantité de noeuds de réseau voisins, et T1 étant un moment prédéfini dans la première période de maintien ;
si Z1 est inférieure ou égale à K1, la diffusion, par le premier noeud de réseau, du premier paquet multidiffusion ;
la détermination (205), par le premier noeud de réseau, si une quantité Z2 de premiers paquets multidiffusion qui sont reçus dans une seconde période de maintien avant un moment d'envoi T2 est supérieure ou égale à une seconde constante de redondance K2, K2 étant un entier égal à la quantité de noeuds de réseau voisins, et T2 étant un moment prédéfini dans la seconde période de maintien ; et
si Z2 est supérieure ou égale à K2, l'arrêt, par le premier noeud de réseau, de la diffusion du premier paquet multidiffusion dans la seconde période de maintien ; ou
si Z2 est inférieure à K2, la diffusion, par le premier noeud de réseau, du premier paquet multidiffusion.

2. Procédé selon la revendication 1, dans lequel le procédé comprend en outre :
lorsque e est supérieur ou égal à 3, l'exécution, par le premier noeud de réseau, d'un algorithme de maintien correspondant à une troisième période de maintien à une e^{ème} période de maintien, une constante de redondance correspondant à chacune de la troisième période de maintien à la e^{ème} période de maintien est égale à la quantité de noeuds de réseau voisins.

3. Procédé selon la revendication 1 ou 2, dans lequel le premier paquet multidiffusion comprend des informations de comptage utilisées pour indiquer que le second noeud de réseau envoie le premier paquet multidiffusion une i^{ème} fois, i étant un entier supérieur à 0 ; et
le fait de déterminer, par le premier noeud de réseau, si une quantité Z1 de premiers paquets multidiffusion qui sont reçus dans la première période de maintien avant un moment d'envoi T1 est inférieure ou égale à une première constante de redondance K1 comprend :
la détermination, par le premier noeud de réseau sur la base des informations de comptage comprises dans le premier paquet multidiffusion qui est reçu avant T1, d'une quantité de premiers paquets multidiffusion qui sont envoyés par le second noeud de réseau la i^{ème} fois ; et
si la quantité de premiers paquets multidiffusion qui sont envoyés la i^{ème} fois est inférieure ou égale à K1, la détermination, par le premier noeud de réseau, que Z1 est inférieure ou égale à K1.

4. Procédé selon l'une quelconque des revendications 1 à 3, dans lequel le fait de déterminer, par le premier noeud de réseau, si une quantité Z2 de premiers paquets multidiffusion qui sont reçus dans une seconde période de maintien avant un moment d'envoi T2 est supérieure ou égale à une seconde constante de redondance K2 comprend :
la détermination, par le premier noeud de réseau sur la base d'informations de comptage comprises dans le premier paquet multidiffusion qui est reçu avant T2, de la quantité de premiers paquets multidiffusion qui sont envoyés la i^{ème} fois ; et
si la quantité de premiers paquets multidiffusion qui sont envoyés la i^{ème} fois est égale à K2, la détermination, par le premier noeud de réseau, du fait que la quantité Z2 de premiers paquets multidiffusion est égale à K2 ; ou
si la quantité de premiers paquets multidiffusion qui sont envoyés la i^{ème} fois est inférieure à K2, la détermination, par le premier noeud de réseau, du fait que la quantité Z2 de premiers paquets multidiffusion est inférieure à K2 ; et
lorsque Z2 est égale à K2, après l'arrêt, par le premier noeud de réseau, de la diffusion du premier paquet multidiffusion dans la seconde période de maintien, le procédé comprend en outre :
l'arrêt, par le premier noeud de réseau, du temporisateur de maintien correspondant au premier paquet multidiffusion.

5. Procédé selon la revendication 3, dans lequel la diffusion, par le premier noeud de réseau, du premier paquet multidiffusion comprend :
la diffusion, par le premier noeud de réseau, du premier paquet multidiffusion, le premier paquet multidiffusion comprenant des informations de comptage utilisées pour indiquer que le premier noeud de réseau envoie le premier paquet multidiffusion à une i^{ème} fois, et j étant un entier supérieur à 0.

6. Dispositif de réseau, dans lequel le dispositif de réseau est un premier noeud de réseau, et le dispositif de réseau comprend :
une unité de réception (1401), configurée pour recevoir un premier paquet multidiffusion envoyé par un second noeud de réseau, le second noeud de réseau étant un quelconque noeud de réseau voisin du premier noeud de réseau, et le noeud de réseau voisin étant un noeud de réseau connecté au premier noeud de réseau ;
**caractérisé par**
une unité de traitement (1402) configurée pour :
démarrer un temporisateur de maintien correspondant au premier paquet multidiffusion, et exécuter une première période de maintien dans e périodes de maintien du temporisateur de maintien, e étant un entier supérieur ou égal à 2 ; et
déterminer si une quantité Z1 de premiers paquets multidiffusion qui sont reçus dans la première période de maintien avant un moment d'envoi T1 est inférieure ou égale à une première constante de redondance K1, K1 étant un entier supérieur à une quantité de noeuds de réseau voisins, et T1 étant un moment prédéfini dans la première période de maintien ; et
une unité de diffusion (1403), configurée pour :
lorsque Z1 est inférieure ou égale à K1, diffuser le premier paquet multidiffusion,
l'unité de traitement étant en outre configurée pour :
déterminer si une quantité Z2 de premiers paquets multidiffusion qui sont reçus dans une seconde période de maintien avant un moment d'envoi T2 est supérieure ou égale à une seconde constante de redondance K2, K2 étant un entier égal à la quantité de noeuds de réseau voisins, et T2 étant un moment prédéfini dans la seconde période de maintien ; et
lorsque Z2 est supérieure ou égale à K2, arrêter la diffusion du premier paquet multidiffusion ; et
l'unité de diffusion étant en outre configurée pour :
lorsque Z2 est inférieure à K2, diffuser le premier paquet multidiffusion.

7. Dispositif de réseau selon la revendication 6, dans lequel l'unité de traitement est en outre configurée pour : lorsque e est supérieur ou égal à 3, exécuter un algorithme de maintien correspondant à une troisième période de maintien à une e^{ème} période de maintien, une constante de redondance correspondant à chacune de la troisième période de maintien à la e^{ème} période de maintien étant un entier égal à la quantité de noeuds de réseau voisins.

8. Dispositif de réseau selon la revendication 6 ou 7, dans lequel le premier paquet multidiffusion comprend des informations de comptage utilisées pour indiquer que le second noeud de réseau envoie le premier paquet multidiffusion une i^{ème} fois, i étant un entier supérieur à 0 ; et
l'unité de traitement est spécifiquement configurée pour :
déterminer, sur la base des informations de comptage comprises dans le premier paquet multidiffusion qui est reçu avant T1, une quantité de premiers paquets multidiffusion qui sont envoyés la i^{ème} fois ; et
lorsque la quantité de premiers paquets multidiffusion qui sont envoyés la i^{ème} fois est inférieure ou égale à K1, déterminer que Z1 est inférieure ou égale à K1.

9. Dispositif de réseau selon l'une quelconque des revendications 6 à 8, dans lequel l'unité de traitement est spécifiquement configurée pour :
déterminer, sur la base des informations de comptage comprises dans le premier paquet multidiffusion qui est reçu avant T2, la quantité de premiers paquets multidiffusion qui sont envoyés par le second noeud de réseau la i^{ème} fois ; et
lorsque la quantité de premiers paquets multidiffusion qui sont envoyés la i^{ème} fois est égale à K2, déterminer que la quantité Z2 de premiers paquets multidiffusion est égale à K2 ; ou
lorsque la quantité de premiers paquets multidiffusion qui sont envoyés la i^{ème} fois est inférieure à K2, déterminer que la quantité Z2 de premiers paquets multidiffusion est inférieure à K2 ; et
l'unité de traitement est en outre configurée pour : lorsque Z2 est égale à K2, arrêter le temporisateur de maintien correspondant au premier paquet multidiffusion.

10. Dispositif de réseau selon la revendication 8, dans lequel l'unité de diffusion est en outre configurée pour diffuser le premier paquet multidiffusion, le premier paquet multidiffusion comprenant des informations de comptage utilisées pour indiquer que le premier noeud de réseau envoie le premier paquet multidiffusion une j^{ème} fois, et j étant un entier supérieur à 0.

11. Dispositif de réseau selon la revendication 8, dans lequel l'unité de traitement est spécifiquement configurée pour :
déterminer si le premier paquet multidiffusion qui est reçu avant T1 est envoyé la i^{ème} fois, et ajouter, à un compteur de maintien (i) correspondant à la i^{ème} fois, la quantité de premiers paquets multidiffusion qui sont envoyés la i^{ème} fois ; et
déterminer qu'une valeur du compteur (i) est la quantité de premiers paquets multidiffusion qui sont envoyés la i^{ème} fois.

12. Dispositif de réseau selon la revendication 9, dans lequel l'unité de traitement est spécifiquement configurée pour :
déterminer si le premier paquet multidiffusion qui est reçu avant T2 est envoyé la i^{ème} fois, et ajouter, à un compteur de maintien (i) correspondant à la i^{ème} fois, la quantité de premiers paquets multidiffusion qui sont envoyés la i^{ème} fois ; et
déterminer qu'une valeur du compteur (i) est la quantité de premiers paquets multidiffusion qui sont envoyés la i^{ème} fois.

13. Dispositif de réseau selon la revendication 6, dans lequel l'unité de traitement est en outre configurée pour : obtenir la quantité de noeuds de réseau voisins, et définir K1 ou K2 sur la base de la quantité de noeuds de réseau voisins.

14. Dispositif de réseau selon la revendication 13, dans lequel l'unité de diffusion est en outre configurée pour : diffuser N seconds paquets multidiffusion, les N seconds paquets multidiffusion étant différents les uns des autres, le second paquet multidiffusion comprenant des informations d'indication, les informations d'indication étant utilisées pour demander au second noeud de réseau qui a reçu le second paquet multidiffusion de diffuser le second paquet multidiffusion une fois, et N étant un entier supérieur ou égal à 1 ;
l'unité de réception est en outre configurée pour recevoir chacun des N seconds paquets multidiffusion ; et
l'unité de traitement étant en outre configurée pour :
déterminer une quantité de chacun des N seconds paquets multidiffusion ; et
déterminer une quantité maximale de seconds paquets multidiffusion dans les seconds paquets multidiffusion comme quantité de noeuds de réseau voisins.

15. Support de stockage lisible par ordinateur, comprenant une instruction, dans lequel lorsque l'instruction est exécutée sur un ordinateur, l'ordinateur est activé pour effectuer le procédé selon l'une quelconque des revendications 1 à 5.
